# NEUE EUROPÄISCHE PATENTSCHRIFT

(11) **EP 1 557 300 B2**
(45) Veröffentlichungstag und Bekanntmachung des Hinweises auf die Entscheidung über den Einspruch: **10.11.2021**
(45) Hinweis auf die Patenterteilung: 04.04.2012
(21) Anmeldenummer: 05001066.9
(22) Anmeldetag: 20.01.2005
(51) Int. Cl.: B60D 1/54, B60D 1/26

(54) **Anhängekupplung**
Trailer hitch
Attache remorque

(30) Priorität: 22.01.2004 DE 102004004504
(43) Veröffentlichungstag der Anmeldung: 27.07.2005
(73) Patentinhaber: ACPS Automotive GmbH, 71706 Markgröningen (DE)
(72) Erfinder: Rimmelspacher, Bernhard, 76287 Rheinstetten (DE); Gentner, Wolfgang, 71254 Ditzingen (DE); Riehle, Jörg, 71679 Asperg (DE); Mayer, Günther, 74357 Bönnigheim (DE); Beringer, Hans-Peter, 73734 Esslingen (DE)
(74) Vertreter: Hoeger, Stellrecht & Partner Patentanwälte mbB

(56) Entgegenhaltungen:
- EP-B1- 1 533 149
- DE-A1- 10 104 186
- DE-A1- 10 243 045
- DE-U1- 20 003 480
- DE-U1- 20 003 480
- FR-A- 2 450 167
- FR-B- 2 227 739

## Beschreibung

Die Erfindung betrifft eine Anhängekupplung für Kraftfahrzeuge umfassend ein fahrzeugfestes Lagerelement, ein gegenüber dem fahrzeugfesten Lagerelement von einer Arbeitsstellung in eine Ruhestellung und umgekehrt bewegbares Anhängeelement, welches eine Kupplungskugel und einen die Kupplungskugel an einem ersten Ende tragenden Kugelhals umfasst, und welches relativ zum Lagerelement in einer Verschieberichtung zwischen einer das Anhängeelement gegenüber dem Lagerelement mehrachsig schwenkbar lagernden Schwenkstellung und einer das Anhängeelement gegenüber dem Lagerelement drehfest haltenden Fixierstellung verschiebbar ist, ein in der Schwenkstellung wirksames mehrachsiges Gelenksystem, durch welches das Anhängeelement an dem Lagerelement gelagert ist, und eine Fixiereinrichtung, mit welcher das bewegbare Anhängeelement mindestens in der Arbeitsstellung an dem Lagerelement formschlüssig fixierbar ist, wobei das Anhängeelement in der Fixierstellung mit dem Lagerelement durch einen ersten Satz von Fixierelementen wechselwirkt, von denen ein erstes am Anhängeelement und ein zweites am Lagerelement angeordnet ist.

Derartige Anhängekupplungen sind aus der FR 2 450 167 A bekannt.

Bei diesen Lösungen besteht aufgrund der Schwenkbarkeit des Anhängeelements um mehrere Schwenkachsen das Problem, dass sich der Kugelhals nicht optimal fixieren lässt.

Der Erfindung liegt daher die Aufgabe zugrunde, eine Anhängekupplung der gattungsgemäßen Art derart zu verbessern, dass diese hinsichtlich der Kinematik des Anhängeelements an die Raumverhältnisse einer möglichst großen Zahl von Kraftfahrzeugen anpassbar ist und eine optimale Fixierung des Kugelhalses möglich ist.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass aufgrund der mehrachsigen Schwenkbarkeit des Anhängeelements relativ zum Lagerelement in der Schwenkstellung in Verbindung mit einer Verschiebung des Anhängeelements relativ zum Lagerelement in die Schwenkstellung die für eine geeignete Bewegungskinematik des Anhängeelements zur Verfügung stehenden Freiheitsgrade größer sind und somit eine optimale Anpassung an unterschiedliche Raum- und Einbauverhältnisse erfolgen kann.

Dadurch, dass der erste Satz von Fixierelementen auf einer Seite des Gelenksystems und der zweite Satz von Fixierelementen auf der anderen Seite des Gelenksystems angeordnet ist, kann in einfacher Weise das zwischen diesen liegende Gelenksystem von in der Fixierstellung beim Anhängerbetrieb wirkenden Kräften freigehalten werden, so dass in einfacher Weise gewährleistet ist, dass das Gelenksystem in der Fixierstellung im Wesentlichen kräftefrei ist. Besonders günstig ist es dabei, wenn das Anhängeelement in der Schwenkstellung mindestens um eine erste Schwenkachse und mindestens um eine quer zur ersten Schwenkachse verlaufende zweite Schwenkachse schwenkbar ist.

Durch eine derartige zweiachsige Verschwenkbarkeit ist eine Vielzahl von Bewegungsmöglichkeiten des Anhängeelements realisierbar.

Noch vorteilhafter ist es, wenn das Anhängeelement in der Schwenkstellung um mehr als eine quer zur ersten Schwenkachse verlaufende Achse schwenkbar ist, so dass noch mehr Freiheitsgrade für eine geeignete Bewegungskinematik des Anhängeelements zur Verfügung stehen.

Gemäß der Erfindung lässt sich die mehrachsige Verschwenkbarkeit des Anhängeelements relativ zum Lagerelement dann realisieren, wenn das Anhängeelement in der Schwenkstellung durch ein in dieser wirksames mehrachsiges Gelenksystem an dem Lagerelement gelagert ist.

Ein derartiges Gelenksystem kann in unterschiedlichster Art und Weise ausgeführt sein.

Eine konstruktiv besonders geeignete Ausführung sieht vor, dass das Gelenksystem mindestens einen Gelenkkörper und eine Gelenkkörperaufnahme umfasst.

Der Gelenkkörper könnte dabei durch einzelne Achsen oder Wellen an der Gelenkkörperaufnahme gelagert sein. Besonders zweckmäßig ist es, wenn das Gelenksystem ein Kugelgelenk umfasst.

Zweckmäßigerweise ist in diesem Fall der Gelenkkörper so ausgebildet, dass er mindestens einen Bereich mit einer Kugelaußenfläche umfasst und dass die Gelenkaufnahme mindestens einen Bereich mit einer Kugelinnenfläche umfasst.

Im Fall einer Ausbildung des Gelenksystems als Kugelgelenk wäre es grundsätzlich ausreichend, wenn der Gelenkkörper lediglich partiell Kugelaußenflächen trägt.

Aus Gründen einer einfachen Herstellbarkeit ist es jedoch besonders günstig, wenn der Gelenkkörper im Wesentlichen ein Kugelkörper ist.

Ferner lässt sich die Bewegbarkeit des im wesentlichen als Kugelkörper ausgeführten Gelenkkörpers konstruktiv besonders einfach dann realisieren, wenn der im wesentlichen als Kugelkörper ausgeführte Gelenkkörper durch mindestens zwei auf gegenüberliegenden Seiten angeordnete Kugelkappenflächen der Gelenkkörperaufnahme mehrachsig gelenkig gelagert ist.

Prinzipiell ist bei einem Kugelgelenk der Gelenkkörper um eine Vielzahl von Schwenkachsen schwenkbar, so dass eine zusätzliche Verschwenkbarkeit des Anhängeelements relativ zum Gelenkkörper grundsätzlich nicht nötig wäre.

Bei einer konstruktiv besonders einfach realisierbaren Lösung ist jedoch vorgesehen, dass das Anhängeelement gegenüber dem Gelenkkörper um die erste Schwenkachse drehbar ist.

Ferner lässt sich die Verschiebbarkeit des Anhängeelements relativ zum Lagerelement besonders einfach dadurch lösen, dass das Anhängeelement relativ zum Gelenkkörper verschiebbar ist.

Alternativ oder ergänzend zum Vorsehen einer Verschiebbarkeit des Anhängeelements relativ zum Gelenkkörper wäre es auch denkbar, den Gelenkkörper zumindest über einen Teilweg, verschiebbar zu gestalten.

Aus Gründen einer möglichst einfachen Realisierbarkeit des mehrachsigen Gelenks ist es jedoch besonders günstig, wenn der Gelenkkörper ausschließlich gelenkig und unverschiebbar an dem Lagerelement gelagert ist.

Die Verschiebbarkeit des Anhängeelements relativ zum Gelenkkörper läßt sich am einfachsten dadurch realisieren, dass das Anhängeelement mit einem Lagerabschnitt den Gelenkkörper in Richtung von dessen Längsachse durchsetzt.

Im Zusammenhang mit dem erfindungsgemäßen Gelenksystem wurde lediglich dessen Wirkung in der Schwenkstellung erläutert. Es wurden keinerlei Angaben zur Wirkung des Gelenksystems in der Fixierstellung gemacht.

Grundsätzlich wäre es denkbar, das Gelenksystem auch in der Fixierstellung mit Kräften zu beaufschlagen und somit das Gelenksystem auch in der Fixierstellung zum Festlegen des Anhängeelements relativ zum Lagerelement heranzuziehen.

Der Aufbau des erfindungsgemäßen Gelenksystems lässt sich jedoch konstruktiv dann vereinfachen, wenn das Gelenksystem in der Fixierstellung im wesentlichen kräftefrei ist, denn dann kann das Gelenksystem so konzipiert werden, dass es keinerlei in der Fixierstellung und somit im Betrieb des Anhängeelements auftretenden Kräfte aufnehmen muss.

Um die Fixierung des Anhängeelements in der Fixierstellung relativ zum Lagerelement zu erreichen, ist vorzugsweise vorgesehen, dass das Anhängeelement in der Fixierstellung mit dem Lagerelement durch einen ersten Satz von Fixierelementen wechselwirkt, von denen ein erstes am Anhängeelement und ein zweites am Lagerelement angeordnet ist.

Noch vorteilhafter ist es, wenn das Anhängeelement und das Lagerelement in der Fixierstellung durch einen zweiten Satz von Fixierelementen wechselwirkt, von denen ein erstes am Anhängeelement und ein zweites am Lagerelement angeordnet ist.

Die Fixierung des Anhängeelements relativ zum Lagerelement in der Fixierstellung lässt sich noch weiter verbessern, wenn das Anhängeelement und das Lagerelement in der Fixierstellung durch einen dritten Satz von Fixierelementen wechselwirken, von denen ein erstes am Anhängeelement und ein zweites am Lagerelement angeordnet ist.

Dabei könnte der dritte Satz von Fixierelementen dem ersten Satz von Fixierelementen zugeordnet sein und auf der selben Seite des Gelenksystems angeordnet sein wie der erste Satz von Fixierelementen.

Besonders günstig ist es, wenn der dritte Satz von Fixierelementen auf der selben Seite des Gelenksystems angeordnet ist wie der zweite Satz von Fixierelementen.

Bei der Zuordnung des dritten Satzes von Fixierelementen zum zweiten Satz von Fixierelementen sind ebenfalls unterschiedliche Lösungen denkbar.

Besonders vorteilhaft läßt sich die Abstützung des Anhängeelements relativ zum Lagerelement dann realisieren, wenn der zweite Satz von Fixierelementen und der dritte Satz von Fixierelementen auf einander gegenüberliegenden Seiten des Anhängeelements angeordnet sind.

Eine aus Gründen einer günstigen räumlichen Anordnung bevorzugte Lösung sieht vor, daß der dritte Satz von Fixierelementen im selben Bereich des Anhängeelements wirksam ist wie der zweite Satz von Fixierelementen.

Um zusätzliche Maßnahmen zum Außereingriffbringen der Sätze von Fixierelementen zu vermeiden, ist vorzugsweise vorgesehen, daß die Fixierelemente durch Bewegen des Anhängeelements von der Fixierstellung in die Schwenkstellung außer Wechselwirkung bringbar sind.

Hinsichtlich der Ausbildung des ersten Satzes von Fixierelementen wurden bislang keine näheren Angaben gemacht. So sieht eine vorteilhafte Lösung vor, daß der erste Satz von Fixierelementen einen als erstes Formschlußelement am Anhängeelement angeordneten Fixierzapfen und als zweites Formschlußelement eine am Lagerelement angeordnete Zapfenaufnahme aufweist.

Bei einer derartigen Ausbildung des ersten Satzes von Fixierelementen ist es günstig, wenn diese auf einer dem Kugelhals abgewandten Seite des Gelenksystems angeordnet ist.

Besonders günstig läßt sich dabei die Wechselwirkung mit dem Gelenkkörper dann realisieren, wenn der Fixierzapfen den Gelenkkörper durchgreift und relativ zum Gelenkkörper in Richtung seiner Längsachse verschiebbar ist.

Um eine optimale Fixierung des Anhängeelements in der Fixierstellung zu erreichen, hat es sich als besonders günstig erwiesen, daß das Anhängeelement in der Fixierstellung mit seinem der Kupplungskugel gegenüberliegenden Ende maximal über den Gelenkkörper übersteht und in der Schwenkstellung mit diesem Ende innerhalb einer Außenkontur des Gelenkkörpers liegt. Damit behindert das Ende des Anhängeelements in der Schwenkstellung die Verschwenkbewegung um die dem Gelenksystem zur Verfügung stehenden Achsen nicht und außerdem besteht in der Fixierstellung in einfacher Weise die Möglichkeit, den insbesondere zwischen dem Gelenksystem und diesem Ende liegenden Fixierzapfen ausreichend lang und somit stabil auszubilden und zu lagern.

Hinsichtlich der Fixierungswirkung des ersten Satzes von Formschlußelementen wurden bislang keine weiterführenden Angaben gemacht.

So ist es mindestens erforderlich, daß der erste Satz von Formschlußelementen das Anhängeelement relativ zum Lagerelement in mindestens einer Querrichtung quer zur Verschieberichtung festlegt.

Noch vorteilhafter ist es, wenn der erste Satz von Formschlußelementen das Anhängeelement in mindestens zwei quer zueinander und quer zur Verschieberichtung laufenden Querrichtungen festlegt, so daß der erste Satz von Formschlußelementen maximal die Möglichkeit einer Drehbewegung um die Verschieberichtung zuläßt, im übrigen jedoch das Anhängeelement relativ zu dem Lagerelement fixiert.

Hinsichtlich des zweiten Satzes von Fixierelementen wurden bislang ebenfalls keine näheren Angaben gemacht. So sieht eine vorteilhafte Ausführungsform des zweiten Satzes von Fixierelementen vor, daß dieser einen Formschlußkörper und eine Formschlußkörperaufnahme aufweist.

Prinzipiell ist eine beliebige Zuordnung der beiden relativ zu dem Lagerelement und dem Anhängeelement denkbar.

Als besonders zweckmäßig hat es sich jedoch erwiesen, wenn der Formschlußkörper am Anhängeelement und die Formschlußkörperaufnahme am Lagerelement angeordnet ist.

Hinsichtlich der Ausbildung des Formschlußkörpers und der Formschlußkörperaufnahme wurden bislang keine näheren Angaben gemacht. So hat es sich als vorteilhaft erwiesen, wenn eines der Fixierelemente des zweiten Satzes von Fixierelementen in einem Winkel zueinander verlaufende Formschlußelemente aufweist.

Besonders günstig ist es, wenn beide Fixierelemente des zweiten Satzes von Fixierelementen in einem Winkel zueinander verlaufende Formschlußflächen aufweisen.

Die Formschlußflächen können dabei grundsätzlich beliebig orientiert sein. Als zweckmäßig hat es sich erwiesen, wenn die Formschlußflächen in der Verschieberichtung mit zunehmender Erstreckung in dieser aufeinander zu verlaufen.

Hinsichtlich der Wirkung der zweiten Formschlußelemente wurden bislang keine näheren Angaben gemacht. Besonders günstig ist es, wenn die zweiten Formschlußelemente das Anhängeelement gegenüber dem Lagerelement drehfest festlegen und somit sich hinsichtlich ihrer Wirkung mit den ersten Formschlußelementen ergänzen.

Besonders zweckmäßig ist es, wenn zur drehfesten Festlegung auch noch eine Festlegung quer zur Verschieberichtung erfolgt.

Um das Anhängeelement möglichst spielfrei in dem Lagerelement zu fixieren, ist es besonders günstig, wenn der zweite Satz von Formschlußelementen in einer quer zur Verschieberichtung verlaufenden Querrichtung eine Schwerkraft erzeugt, die die Möglichkeit schafft, eine in der Fixierstellung möglichst große Spielfreiheit zu erreichen.

Hinsichtlich der Anordnung des zweiten Satzes von Formschlußelementen wurden bislang keine detaillierten Angaben gemacht.

So ist es besonders günstig, wenn der zweite Satz von Fixierelementen derart angeordnet ist, daß dieser in der Fixierstellung auf einer in Fahrtrichtung rückwärtigen Seite des Lagerelementes und des Anhängeelements wirksam ist.

Ferner ist es günstig, wenn in der Fixierstellung der zweite Satz von Fixierelementen im Bereich nahe eines zweiten Endes des Kugelhalses wirksam ist.

Ferner sieht eine vorteilhafte Lösung vor, daß das am Anhängeelement angeordnete Fixierelement im Bereich einer zum zweiten Ende des Kugelhalses hin verlaufenden Umbiegung des Kugelhalses angeordnet ist.

Hinsichtlich der Ausbildung des dritten Satzes von Fixierelementen wurden bislang ebenfalls keine näheren Angaben gemacht.

So sieht ein besonders vorteilhaftes Ausführungsbeispiel vor, daß der dritte Satz von Fixierelementen einen am Anhängeelement angeordneten Formschlußkörper und eine am Lagerelement angeordnete Formschlußaufnahme umfaßt.

Besonders vorteilhaft ist der dritte Satz von Fixierelementen dann angeordnet, wenn dieser in der Fixierstellung auf einer in Fahrtrichtung vorderen Seite des Lagerelements und des Anhängeelements angeordnet ist.

Besonders zweckmäßig sind der dritte Satz von Fixierelementen und der zweite Satz von Fixierelementen dann einsetzbar, wenn diese in der Fixierstellung das Anhängeelement quer zur Verschieberichtung im wesentlichen spielfrei fixierend ausgebildet sind.

Dies läßt sich insbesondere dadurch günstig erreichen, daß in der Fixierstellung der zweite Satz von Fixierelementen das Anhängeelement in diesem Bereich mit einer quer zur Verschieberichtung weisenden Kraftkomponente beaufschlagt.

Im Hinblick auf eine Festlegung des Anhängeelements in der Fixierstellung relativ zum Lagerelement ist erfindungsgemäß vorgesehen, dass die Fixiereinrichtung eine Blockiereinrichtung aufweist, die ein Bewegen des Anhängeelements relativ zum Lagerelement in der Verschieberichtung blockiert.

Die Blockiereinrichtung einen an einem der Elemente angeordneten Sperrkörper aufweist, welcher in eine eine Sperrfläche am anderen Element hintergreifende Position bringbar ist.

Besonders vorteilhaft ist eine Blockiereinrichtung, bei welcher der Sperrkörper von einer Freigabestellung kraftbeaufschlagt in einer Bewegungsrichtung in die Sperrstellung bewegbar ist.

Um den Sperrkörper mit der Kraft zur Bewegung desselben in Richtung der Sperrstellung zu beaufschlagen, ist zweckmäßigerweise vorgesehen, daß die Blockiereinrichtung einen Sperrkörperantrieb aufweist, mit welchem der Sperrkörper mit einer diesen von der Freigabestellung in Richtung der Sperrstellung bewegenden Kraft beaufschlagbar ist.

Vorzugsweise ist der Sperrkörperantrieb dabei so ausgebildet, daß er ein Antriebselement aufweist, mit welchem der Sperrkörper von der Freigabestellung in die Sperrstellung bewegbar ist.

Dieses Antriebselement kann in unterschiedlichster Art und Weise angetrieben sein.

Eine günstige Lösung sieht vor, daß das Antriebselement durch einen elastischen Kraftspeicher beaufschlagt ist.

Besonders günstig ist es im vorliegenden Fall, wenn der Sperrkörper und der Sperrkörperantrieb in dem Lagerelement angeordnet sind, da dieses fahrzeugfest angeordnet ist und sich somit auch der Sperrkörperantrieb fahrzeugfest anordnen läßt.

Vorzugsweise ist vorgesehen, daß in dem Lagerelement der Sperrkörper zwischen der Freigabestellung und der Sperrstellung in der Bewegungsrichtung quer zur Verschieberichtung bewegbar ist.

Zweckmäßigerweise ist in diesem Fall vorgesehen, daß das Antriebselement in einer quer zur Bewegungsrichtung verlaufenden Aktivierungsrichtung verschiebbar im Lagerelement angeordnet ist.

Eine besonders zweckmäßige Ausbildung des Antriebselements sieht vor, daß dieses eine Antriebskulisse mit einer Aufnahme aufweist, in welcher der Sperrkörper in der Freigabestellung eintaucht, und mit einer Verschiebefläche, mit welcher der Sperrkörper von der Freigabestellung in die Sperrstellung bewegbar ist.

Die Blockiereinrichtung kann grundsätzlich lediglich die Fixierstellung blockieren und somit das Anhängeelement in dieser halten.

Um das Anhängeelement jedoch spielfrei in dem Lagerelement zu fixieren ist es besonders vorteilhaft, wenn die Blockiereinrichtung in der Sperrstellung des Sperrkörpers aufgrund von dessen Zusammenwirken mit der Sperrfläche das Anhängeelement in Richtung der Fixierstellung kraftbeaufschlagt.

Eine derartige Beaufschlagung führt vorzugsweise dazu, daß die Blockiereinrichtung zumindest einen Teil der Sätze von Fixierelementen in spielfreier Anlage hält.

Da sich jedoch beim Betrieb des Fahrzeugs stets noch nachträglich durch Verschleiß ein Spiel einstellen kann, ist es besonders günstig, wenn die Blockiereinrichtung auf den mindestens einen Teil der Sätze von Fixierelementen spielfrei nachstellend wirkt.

Ein derartiges spielfreies nachstellendes Einwirken läßt sich insbesondere dadurch erreichen, daß die Sperrfläche schräg zur Verschieberichtung verläuft.

Ferner ist es zweckmäßig, wenn sich an die Verschiebefläche des Antriebselements eine Keilfläche anschließt, welche den Sperrkörper in Richtung der Sperrstellung nachstellend beaufschlagt, so daß auch bei einer verschleißbedingten Nachstellbewegung des Sperrkörpers auf der Sperrfläche die Kraftbeaufschlagung des Sperrkörpers aufgrund der Keilfläche erhalten bleibt.

Hinsichtlich der Möglichkeit, die Sperrstellung des Sperrkörpers zu lösen, wurden bislang keine näheren Angaben gemacht. So sieht eine vorteilhafte Lösung vor, daß die Blockiereinrichtung eine auf den Sperrkörperantrieb wirkende Betätigungseinrichtung umfaßt, mit welcher auf das Antriebselement entgegen der Kraftwirkung des elastischen Kraftspeichers einwirkbar ist.

Eine derartige Betätigungseinrichtung ist vorzugsweise mit einem Betätigungselement versehen.

Ferner ist es günstig, wenn die Betätigungseinrichtung einen Freilauf aufweist, welcher es zuläßt, daß das Betätigungselement in seine Ausgangsstellung zurückkehrt, obwohl der Sperrkörperantrieb in seiner inaktiven Stellung steht.

Darüber hinaus sieht eine vorteilhafte Ausführungsform der erfindungsgemäßen Anhängekupplung vor, daß der Sperrkörperantrieb eine Rasteinrichtung aufweist, welche das Antriebselement in seiner inaktiven Stellung hält, so lange das Anhängeelement außerhalb der Fixierstellung steht.

Eine derartige Rasteinrichtung schafft die Möglichkeit, die durch die Betätigungseinrichtung erreichbare inaktive Stellung des Antriebselements für den Sperrkörper so lange aufrecht zu erhalten, bis das Anhängeelement wieder in der Fixierstellung steht und erst dann in der Fixierstellung wiederum durch die Blockiereinrichtung in dieser blockiert werden kann.

Vorzugsweise ist dabei die Rasteinrichtung so ausgebildet, daß das Antriebselement bei Erreichen der Fixierstellung durch das Anhängeelement die inaktive Stellung wieder verläßt und wiederum den Sperrkörper in Richtung der Sperrstellung beaufschlagt, so daß das Antriebselement wieder in die aktive Stellung übergeht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein Ausführungsbeispiel einer in einem Heckbereich einer Fahrzeugkarosserie montierten erfindungsgemäßen Anhängekupplung in Seitenansicht;
- Fig. 2: eine perspektivische Darstellung des Ausführungsbeispiels mit transparent gezeichnetem Stoßfänger;
- Fig. 3: eine Draufsicht in Richtung des Pfeils H in Fig. 1 mit transparent gezeichnetem Stoßfänger;
- Fig. 4: eine Ansicht in Richtung des Pfeils S in Fig. 3;
- Fig. 5: eine Darstellung einer erfindungsgemäßen Anhängekupplung in einer Schwenkstellung des Anhängeelements im Schnitt längs Linie 5-5 in Fig. 3;
- Fig. 6: eine Darstellung ähnlich Fig. 5 längs Linie 6-6 in Fig. 3;
- Fig. 7: eine Darstellung der erfindungsgemäßen Anhängekupplung mit in Fixierstellung stehendem Anhängeelement ähnlich Fig. 6;
- Fig. 8: eine Seitenansicht ähnlich Fig. 7 des Anhängeelements;
- Fig. 9: einen Schnitt längs Linie 9-9 in Fig. 8;
- Fig. 10: eine Ansicht des erfindungsgemäßen Lagerelements in Richtung des Pfeils V in Fig. 11;
- Fig. 11: eine Ansicht des erfindungsgemäßen Lagerelements in Richtung des Pfeils R in Fig. 10;
- Fig. 12: eine Ansicht des erfindungsgemäßen Lagerelements in Richtung des Pfeils L in Fig. 10;
- Fig. 13: einen Schnitt längs Linie 13-13 in Fig. 7;
- Fig. 14: einen Schnitt längs Linie 14-14 in Fig. 13 im Bereich des Lagerelements mitsamt einer perspektivischen Darstellung einer erfindungsgemäßen Betätigungseinrichtung und einer Rasteinrichtung und
- Fig. 15: eine Draufsicht in Richtung des Pfeils O in Fig. 14.

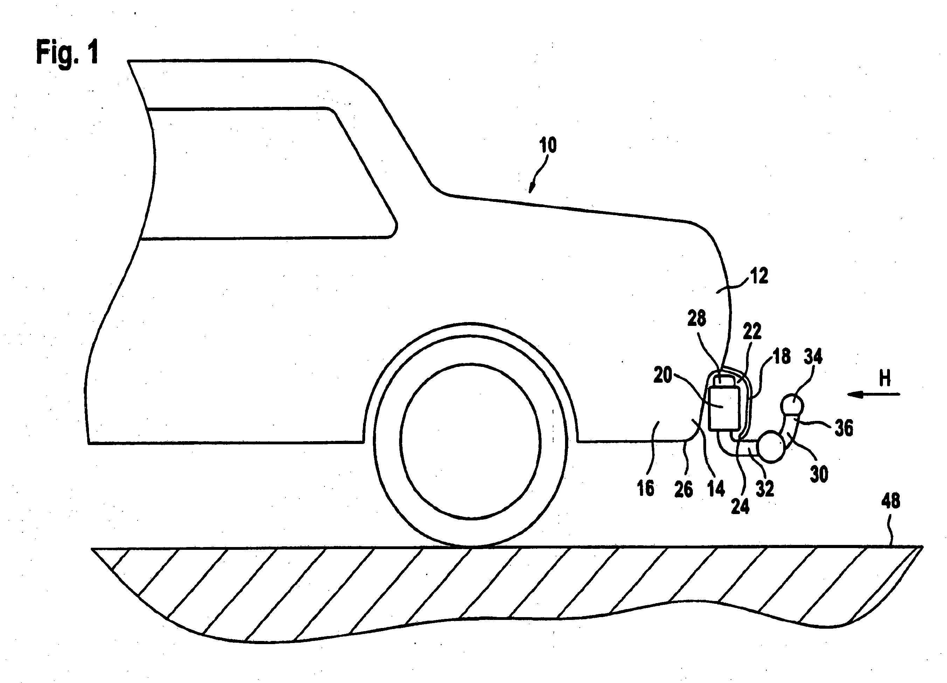

Ein Ausführungsbeispiel einer erfindungsgemäßen Anhängekupplung, dargestellt in Fig. 1, ist an einer Karosserie 10 eines Kraftfahrzeugs in einem Heckbereich 12 montierbar, und umfaßt ein Lagerelement 20, welches zwischen einer Rückseite 14 eines unteren Heckbereichs 16 und einem Stoßfänger 18 montierbar ist.

Das Lagerelement 20 liegt dabei im wesentlichen vollständig in einem Zwischenraum 22 zwischen dem Stoßfänger 18 und der Rückseite 14 des unteren Heckbereichs 16, und zwar vorzugsweise oberhalb einer Unterkante 24 des Stoßfängers 18 und oberhalb einer Unterseite 26 der Karosserie 10, welche sich an die Rückseite 14 anschließt.

Vorzugsweise ist dabei das Lagerelement 20 an einem zumindest bereichsweise parallel zum Stoßfänger 18 verlaufenden Querträger 28 gehalten.

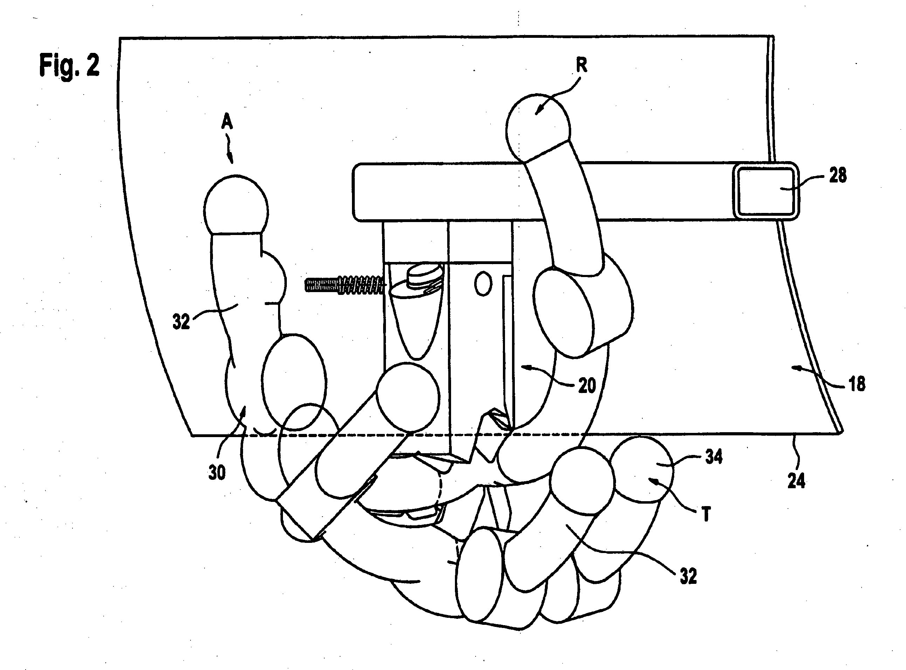

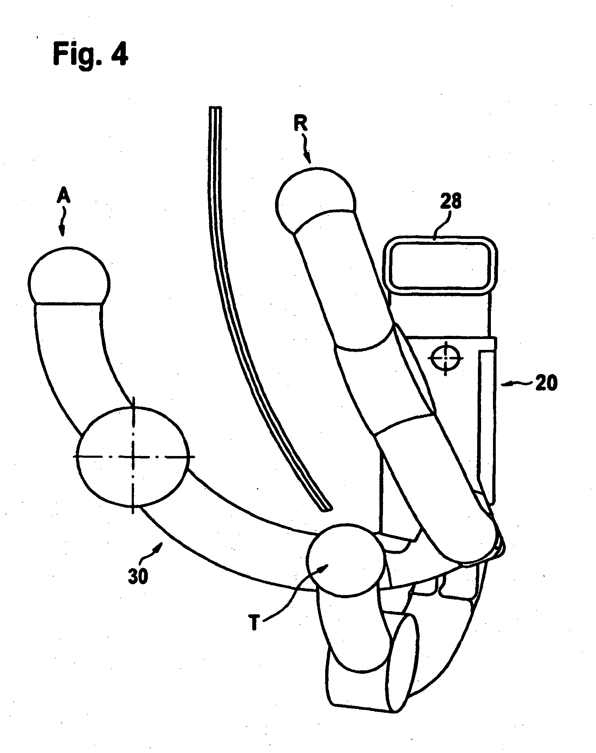

An dem Lagerelement 20 ist ferner ein als Ganzes mit 30 bezeichnetes Anhängeelement gehalten, welches einen Kugelhals 32 aufweist, der an einem ersten Ende 36 eine Kupplungskugel 34 trägt und, wie in Fig. 2 bis 4 dargestellt, von einer Arbeitsstellung A in eine Tauchstellung T bewegbar ist, in welcher die Kupplungskugel 34 unter der Unterkante 24 des Stoßfängers 18 hindurchbewegbar ist und dann von der Tauchstellung T in eine Ruhestellung R bewegbar ist, in welcher die Kupplungskugel 34 im wesentlichen mitsamt dem Kugelhals in dem Zwischenraum 22 zwischen dem Stoßfänger 18 und der Rückseite 14 des unteren Heckbereichs 16 angeordnet ist.

Dabei ist das Anhängeelement 30 gegenüber dem Lagerelement 20 in der Arbeitsstellung A und der Ruhestellung R in einer Fixierstellung angeordnet, während das Verschwenken zwischen der Arbeitsstellung A und der Ruhestellung R in einer Schwenkstellung des Anhängeelements 30 relativ zum Lagerelement 20 erfolgt.

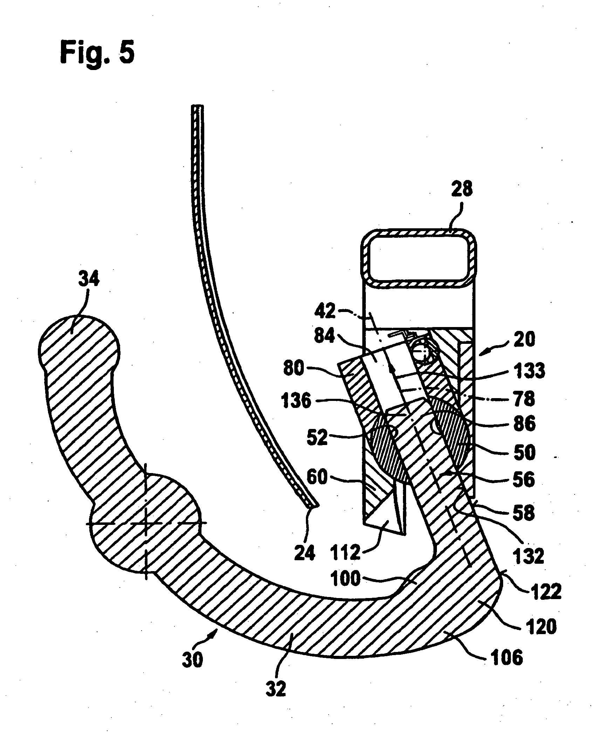

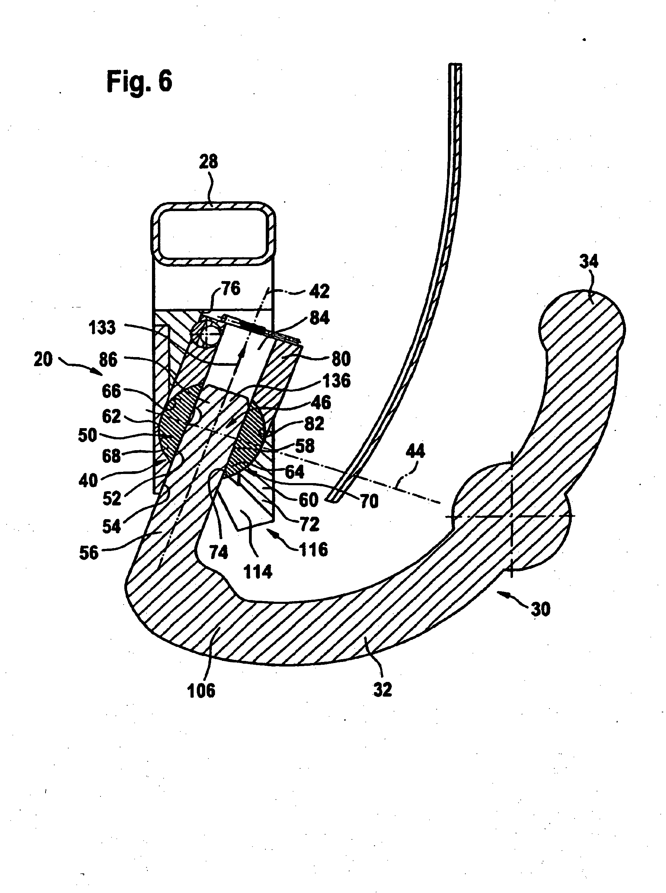

In der Schwenkstellung, dargestellt in Fig. 5 und Fig. 6, und zwar anhand der sich unmittelbar aus der Arbeitsstellung A ergebenden Schwenkstellung, ist das Anhängeelement 30 mittels eines zumindest zweiachsig schwenkbaren Gelenks 40 gegenüber dem Lagerelement 20 schwenkbar gelagert, wobei das zweiachsig schwenkbare Gelenk 40 zumindest eine Schwenkbewegung um eine erste Schwenkachse 42 und eine senkrecht zu dieser verlaufende Schwenkachse 44 erlaubt.

Die erste Schwenkachse 42 ist festgelegt durch ein erstes Schwenkgelenk 46, mit welchem das Anhängeelement 30 gegenüber einem Gelenkkörper 50 des zweiachsigen Gelenks 40 schwenkbar ist und verläuft zumindest in der Arbeitsstellung A und der Ruhestellung R, noch besser in allen Stellungen des Anhängeelements 30, quer zu einer Fahrbahnoberfläche 48.

Dieses erste Schwenkgelenk 46 wird beispielsweise gebildet durch einen im Gelenkkörper 50 vorgesehenen Durchbruch 52 mit zur ersten Schwenkachse 42 zylindrischen Mantelflächen 54 und durch einen Lagerzapfen 56 mit einer zur ersten Schwenkachse 42 zylindrischen Außenfläche 58, so daß der Lagerzapfen 56 in dem Durchbruch 52 frei gegenüber dem Gelenkkörper 50 drehbar ist.

Die zweite Schwenkachse 44 wird bei dem dargestellten Ausführungsbeispiel gebildet durch eine gelenkige Lagerung des Gelenkkörpers 50 in einem von dem Lagerelement 20 gebildeten Gelenkgehäuse 60.

Bei dem dargestellten Ausführungsbeispiel ist der Gelenkkörper 50 als Kugel ausgebildet und weist eine Kugelaußenfläche 62 auf, welche in einer vom Gelenkgehäuse 60 gebildeten Gelenkpfanne 64 durch deren Kugelinnenfläche 66 drehbar gelagert ist.

Vorzugsweise liegt die Kugelinnenfläche 66 an der Kugelaußenfläche 62 in einem zur Schwenkachse 42 äquatorialen Bereich 68 der Kugelaußenfläche 62 an und führt somit die als Gelenkkörper 50 dienende Gelenkkugel unter anderem um die den äquatorialen Bereich 68 schneidende und senkrecht zur ersten Schwenkachse 42 verlaufende zweite Schwenkachse 44, und zusätzlich auch um eine beliebige Zahl weiterer, senkrecht zur ersten Schwenkachse 42 verlaufender Schwenkachsen, bedingt durch die Lagerung des Gelenkkörpers 50 als Gelenkkugel in der Gelenkpfanne 64 in Form eines als Ganzes mit 70 bezeichneten Kugelgelenks.

Die Gelenkpfanne 64 wird vorzugsweise gebildet durch einen Formkörper 72 des Lagerelements 20, welcher an dem Querträger 28 gehalten ist, wobei ein Teil der Gelenkpfanne 64 einerseits durch einen unteren Bereich 74 einer Ausnehmung 76 im Formkörper 72 gebildet ist, und andererseits durch einen in die Ausnehmung 76 eingesetzten Einsatzkörper 80, welcher mit seiner der Gelenkkugel 50 zugewandten Stirnseite 82 die Kugelinnenfläche 66 des unteren Bereichs 74 der Ausnehmung 76 vervollständigt.

Der Einsatzkörper 80 ist dabei in der Ausnehmung 76 fest angeordnet, so daß die Gelenkkugel 50 zwischen dem unteren Bereich 74 der Ausnehmung 76 und der Stirnseite 82 des Einsatzkörpers 80 geführt ist.

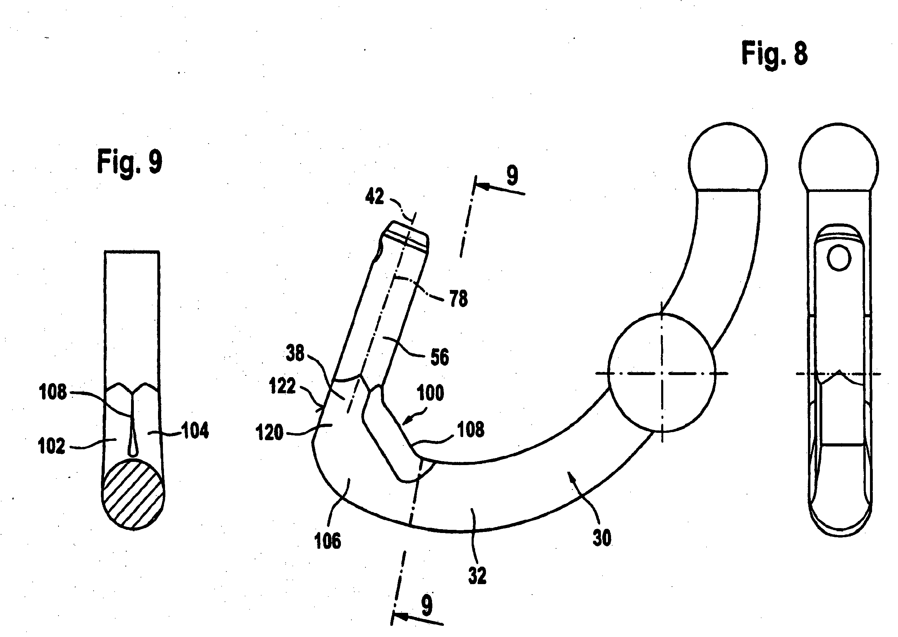

Der Einsatzkörper 80 weist ferner einen zentralen Durchbruch 84 auf, welcher so angeordnet ist, daß mit diesem der Durchbruch 52 der Gelenkkugel 50 fluchtend ausgerichtet werden kann und somit der Lagerzapfen 56 in den Durchbruch 84 durch Verschieben des Lagerzapfens 56 in Richtung seiner Längsachse 78 und somit bei dieser Ausrichtung der Gelenkkugel 50 auch längs der ersten Schwenkachse 42 mit einem einen Fixierzapfen 86 bildenden oberen Bereich eingeschoben werden kann, wie in Fig. 8 dargestellt.

Der den Durchbruch 84 umfassenden Teil des Einsatzkörpers 80 bildet somit eine Aufnahme 90 für den als Fixierzapfen 86 über die Gelenkkugel 50 überstehenden Teil des Lagerzapfens 56, welcher in der Aufnahme 90 quer zur ersten Schwenkachse 42 durch Verschieben des Lagerzapfens 56 in Richtung der ersten Schwenkachse 42 in der in Fig. 8 dargestellten Fixierstellung fixierbar ist.

Damit kann sich der Lagerzapfen 56 lediglich noch um die erste Schwenkachse 42 jedoch nicht mehr um die zweite Schwenkachse 44 drehen, da diesbezüglich auch die Gelenkkugel 50 durch den Lagerzapfen 56 festgelegt ist.

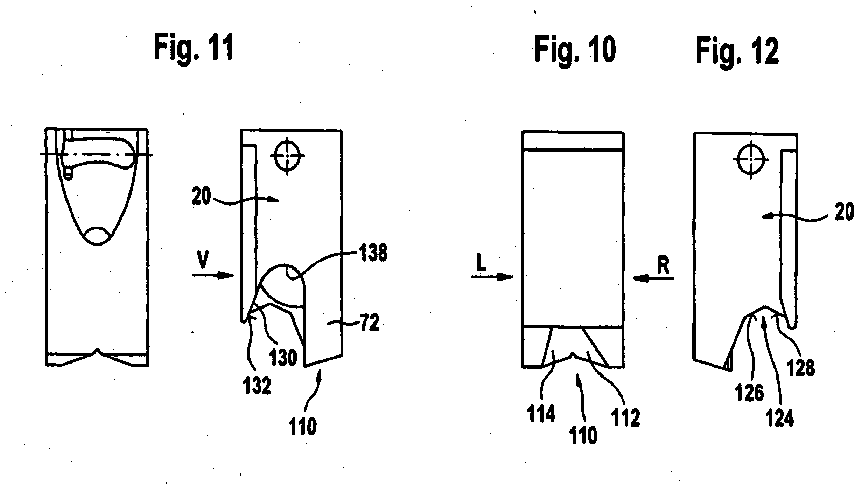

Ferner erfolgt eine weitere Fixierung des Anhängeelements 30 in dem Lagerelement 20 durch einen an das Anhängeelement 30 angeformten Formschlußkörper 100, welcher wie in Fig. 9 und 10 dargestellt, zwei keilförmig zueinander verlaufende Formschlußflächen 102 und 104 umfaßt. Der Formschlußkörper 100 ist dabei im Bereich eines Übergangs von dem Lagerzapfen 56 zu dem Kugelhals 32, vorzugsweise nahe einem zweiten Ende 38 des Kugelhalses 32 angeordnet, und zwar in einem Bereich einer Innenseite 108 einer Umbiegung 106 des Kugelhalses 32, welche sich unmittelbar an das zweite Ende 38 anschließt, so daß sich an der Innenseite 108 die Formschlußflächen 102 und 104 zu einer die Innenseite 108 bildenden Kante vereinigen, welche quer zur Längsrichtung 78 des Lagerzapfens 56 verläuft, vorzugsweise in einem stumpfen Winkel von mehr als ungefähr 90°.

Ferner ist der Formkörper 72 des Lagerelements 20 mit einer Aufnahme 110 für den Formschlußkörper 100 versehen, welche Formschlußflächen 112 und 114 aufweist, an welchen bei in die Fixierstellung eingeschobenem Lagerzapfen 56 die Formschlußflächen 102 und 104 anliegen, die aufgrund ihres keilförmigen Verlaufs dazu beitragen, das Anhängeelement 30 drehfest gegenüber dem Lagerelement 20, und somit insbesondere gegen eine Drehung um die erste Schwenkachse 42 gesichert, zu fixieren.

Schließlich ist das Anhängeelement 30 auf seiner dem Formschlußkörper 100 abgewandten und somit auf einer Außenseite der Umbiegung 106 angeordneten Seite mit einem zweiten Formschlußkörper 120 versehen, welcher eine flache, vorzugsweise parallel zur Längsachse 78 des Lagerzapfens 56 verlaufende Formschlußfläche 122 aufweist.

Diese Formschlußfläche 122 ist, wie in Fig. 11 dargestellt, an einer der Aufnahme 110 gegenüberliegenden Seite vorgesehenen zweiten Formschlußaufnahme 130 anlegbar, welche ebenfalls eine der Formschlußfläche 122 entsprechende ebenfalls flache Formschlußfläche 132 aufweist, welche der Aufnahme 110 zugewandt und auf einer dem Einsatzkörper 80 gegenüberliegenden Seite der Gelenkkugel 50 angeordnet ist.

Auch der zweite Formschlußkörper 120 und die zweite Formschlußaufnahme 130 sind aufgrund ihrer parallelen Ausrichtung zur Längsachse 78 und somit auch zur ersten Schwenkachse 42 durch Verschieben des Lagerzapfens 56 in einer in Richtung seiner Längsachse 78 verlaufenden Verschieberichtung 133 von der Schwenkstellung in die Fixierstellung miteinander in Eingriff bringbar.

Vorzugsweise bilden einerseits die Formschlußflächen 112 und 114 mit der Formschlußfläche 132 eine Art keilförmige Aufnahme, in welche die Formschlußflächen 102 und 104 des ersten Formschlußkörpers sowie die Formschlußfläche 122 des zweiten Formschlußkörpers 120 ebenfalls als eine Art Keil einschiebbar und durch eine Bewegung in der Verschieberichtung 133 zu der Fixierstellung hin spielfrei miteinander verkeilbar sind.

Vorzugsweise ist hierzu der zweite Formschlußkörper 120 derart ausgebildet, daß dessen Formschlußfläche 122 senkrecht zu einer Krümmungsebene 134 des Kugelhalses 32 verläuft und in einem Abstand von der zweiten Schwenkachse 42, welcher gleich oder größer ist als ein Radius der Außenfläche 58 des Lagerzapfens 56.

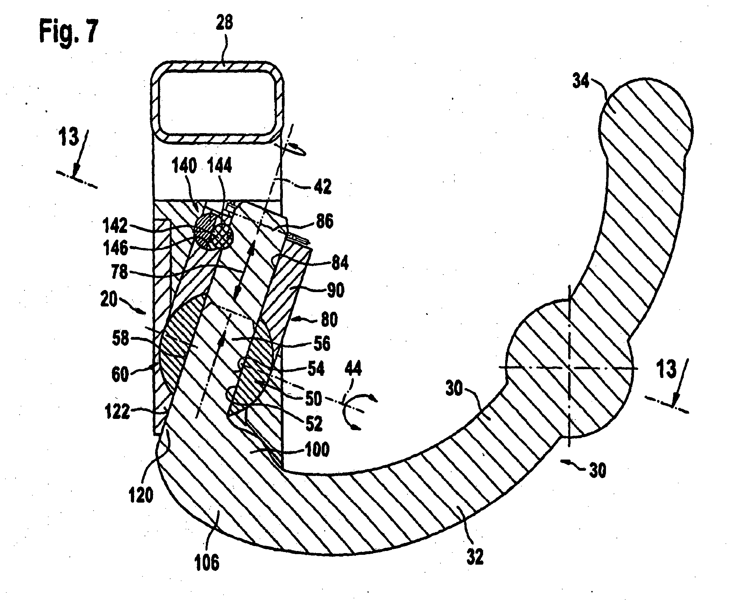

Beim Übergang von der in Fig. 7 dargestellten Fixierstellung in die in Fig. 5 und 6 dargestellte Schwenkstellung läßt sich nunmehr der Lagerzapfen 56 derart entgegengesetzt zur Verschieberichtung 133 verschieben, daß der Fixierzapfen 86 den Durchbruch 84 verläßt und in den Durchbruch 52 der Gelenkkugel 50 eintritt, wobei ein Ende 136 des Lagerzapfens 56 innerhalb der Kugelaußenfläche 62 der Gelenkkugel 50 liegt oder diese maximal berührt, so daß die Gelenkkugel 50 frei in allen Richtungen in der Gelenkpfanne 64 drehbar ist und zusätzlich noch der Lagerzapfen 56 um die erste Schwenkachse 42 in dem Durchbruch 52 relativ zur Gelenkkugel 50 drehbar ist.

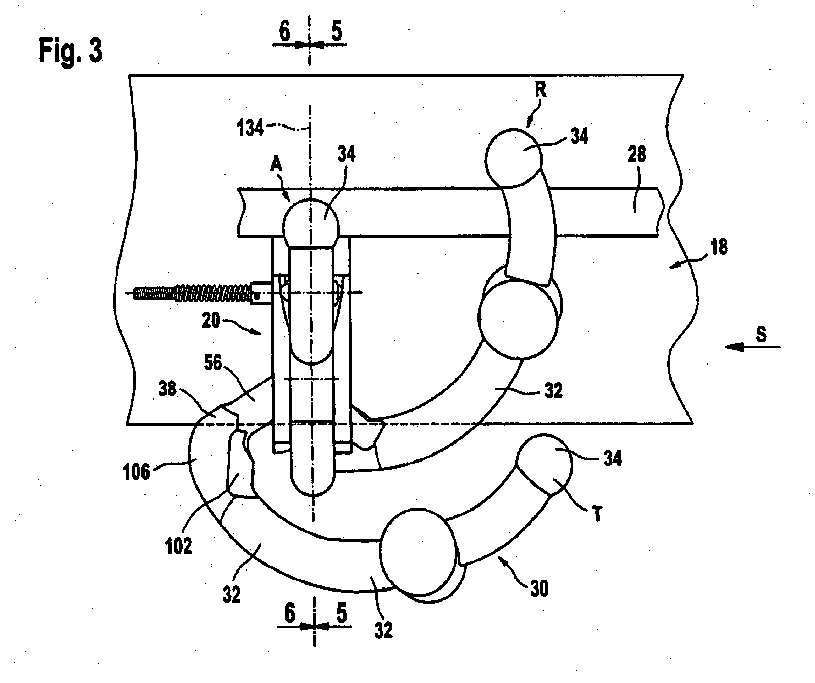

Damit läßt sich, wie insbesondere in Fig. 3 erkennbar, der Lagerzapfen 56 um die zweite Schwenkachse 44 in Richtung einer der Ruhestellung R gegenüberliegenden Seite mit seinem sich an das zweite Ende 38 des Kugelhalses 32 anschließenden Bereich verschwenken und zusätzlich noch um die erste Schwenkachse 42 drehen, woraus die in Fig. 3 dargestellte Tauchstellung T des Anhängeelements 30 resultiert.

Dies wird insbesondere noch dadurch erleichtert, daß, wie in Fig. 11 dargestellt, der Formkörper 72 auf dieser Seite mit einem hochgezogenen Ausschnitt 138 zwischen der zweiten Formschlußaufnahme 130 und der ersten Formschlußaufnahme 110 versehen ist, welcher eine Schwenkbewegung der ersten Schwenkachse 42 um die zweite Schwenkachse 44 um beispielsweise mehr als 40°, noch besser mehr als 45° erlaubt.

Zum Festlegen des Anhängeelements 30 in der Ruhestellung R ist, wie in Fig. 12 dargestellt, das Lagerelement 20 auf seiner der Ruhestellung R zugewandten Seite mit einem Ausschnitt 124 versehen, welcher Anlageflächen 126 und 128 aufweist, an welchen die Formschlußflächen 102 und 104 des ersten Formschlußkörpers 100 in der Ruhestellung R anlegbar sind, um eine um die erste Schwenkachse 42 drehfeste Fixierung des Anhängeelements 30 in der Ruhestellung R zu erreichen.

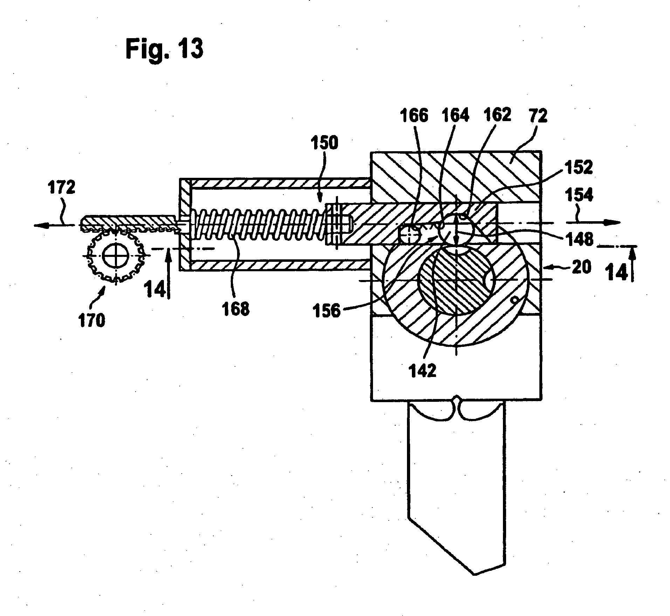

Um ein Lösen des Fixierzapfens 86 aus der Fixierstellung zu verhindern, ist, wie in Fig. 7 und 13 dargestellt, eine als Ganzes mit 140 bezeichnete Blockiereinrichtung vorgesehen, welche einen Sperrkörper 142 aufweist, der in einer Bewegungsrichtung 148 zwischen einer in Fig. 7 dargestellten Sperrstellung und einer in Fig. 13 dargestellten Freigabestellung hin und her bewegbar ist.

In der in Fig. 7 dargestellten Sperrstellung hintergreift der Sperrkörper 142 eine am Fixierzapfen 86 vorgesehene Sperrfläche 144, welche schräg zur Längsachse 78 verläuft und in der Fixierstellung auf einer Seite des Sperrkörpers 142 angeordnet ist, welche der Position der Sperrfläche 144 in der Schwenkstellung gegenüberliegt.

Der Sperrkörper 142 ist in einer quer zum Durchbruch 52 verlaufenden Ausnehmung 146 gelagert und in dieser zwischen der Sperrstellung und der Freigabestellung in Richtung der Bewegungsrichtung 148 beweglich, welche quer zur Längsrichtung 78 verläuft, so daß der Sperrkörper 142 in der Sperrstellung in den Durchbruch 84 eingreift, während er in der Freigabestellung außerhalb des Durchbruchs 84 steht.

Zum Bewegen des Sperrkörpers 142 zwischen der Freigabestellung und der Sperrstellung ist ein als Ganzes mit 150 bezeichneter Sperrkörperantrieb vorgesehen, welcher ein Antriebselement 152 aufweist, das in einer Aktivierungsrichtung 154 von einer inaktiven Stellung in eine aktive Stellung verschiebbar in dem Formkörper 72 des Lagerelements 20 gelagert ist und mit einer Antriebskulisse 156 versehen ist, mit welcher das Antriebselement 152 auf den Sperrkörper 142 wirkt.

Die Antriebskulisse 156 umfaßt dabei eine Aufnahme 162, in welche der Sperrkörper 142 in seiner Freigabestellung eintaucht, in welcher er nicht in den Durchbruch 84 eingreift. Im Anschluß an die Aufnahme 162 ist die Antriebskulisse 156 mit einer Verschiebefläche 164 versehen, welche bei Beaufschlagen des Sperrkörpers 142 diesen in der Sperrstellung hält. Im Anschluß an die Verschiebefläche 164 ist zusätzlich noch eine Keilfläche 166 vorgesehen, die es erlaubt, den Sperrkörper 142 nachstellend in der Richtung der Sperrstellung zu bewegen und so gegebenenfalls geringfügigen Bewegungen der Sperrfläche 144 in der Verschieberichtung 133 zu folgen, um ständig die Sperrfläche 144 durch den Sperrkörper 142 beaufschlagt zu halten.

Das Antriebselement 152 der Antriebseinrichtung 150 ist ferner durch einen federelastischen Kraftspeicher ständig in der Aktivierungsrichtung 154 beaufschlagt, so daß die Antriebskulisse 156 stets das Bestreben hat, sich soweit quer zur Bewegungsrichtung 148 des Sperrkörpers 142 zu verschieben, daß der Sperrkörper 142 nicht in die Aufnahme 162 eintauchen kann, sondern mit zumindest durch die Verschiebefläche 164 der Antriebskulisse 156 beaufschlagt ist, noch besser durch die Keilfläche 166 und somit ständig kraftbeaufschlagt an der Sperrfläche 144 des Fixierzapfens 86 anliegt.

Damit erfolgt seitens des Sperrkörpers 142 eine ständige Beaufschlagung des Fixierzapfens 86 in der Verschieberichtung 133 und somit werden die Formschlußflächen 102, 104 des Formschlußkörpers 100 an den Formschlußflächen 112, 114 der Aufnahme 110 sowie die Formschlußfläche 122 des zweiten Formschlußkörpers 120 an der Formschlußfläche 132 der zweiten Formschlußaufnahme 130 in Anlage gehalten und außerdem aufgrund deren keilförmige Anordnung relativ zueinander in einer spielfrei verkeilten Stellung gehalten.

Die Freigabestellung des Sperrkörpers 142 läßt sich nur dann erreichen, wenn das Antriebselement 152 durch eine Betätigungseinrichtung 170 in einer Betätigungsrichtung 172 entgegengesetzt der Kraftwirkung des elastischen Kraftspeichers 168 beaufschlagt wird und somit die Antriebskulisse 156 entgegengesetzt zur Aktivierungsrichtung 154 von der aktiven Stellung in die inaktive Stellung soweit verschoben wird, daß der Sperrkörper 142 in die Aufnahme 162 eintauchen und somit in seine Freigabestellung übergehen.

Prinzipiell ist es denkbar, die Betätigungseinrichtung 170 so auszubilden, daß mit einem Seilzug in Betätigungsrichtung 172 auf das Antriebselement 152 eingewirkt werden kann, um der Kraft des elastischen Kraftspeichers 168 entgegenzuwirken.

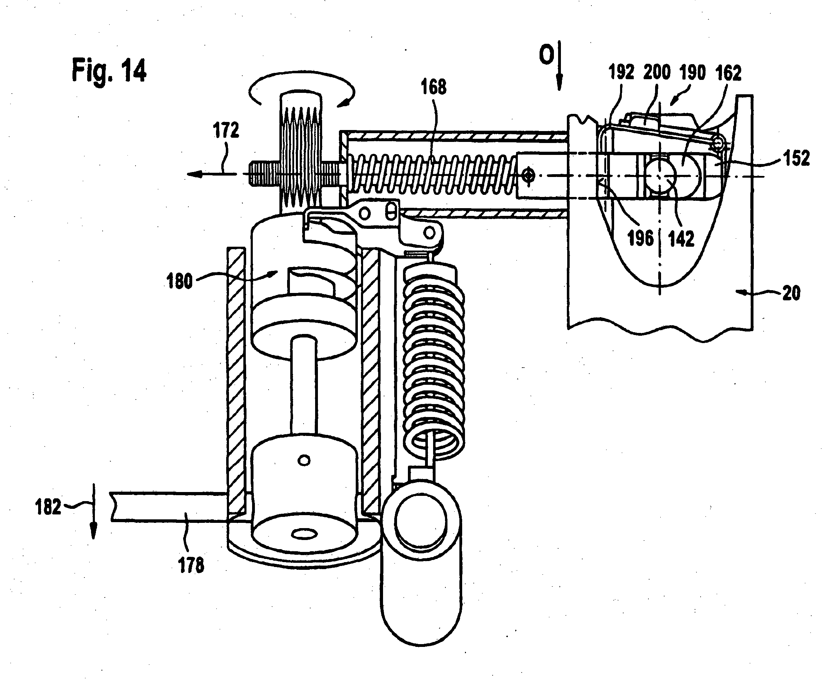

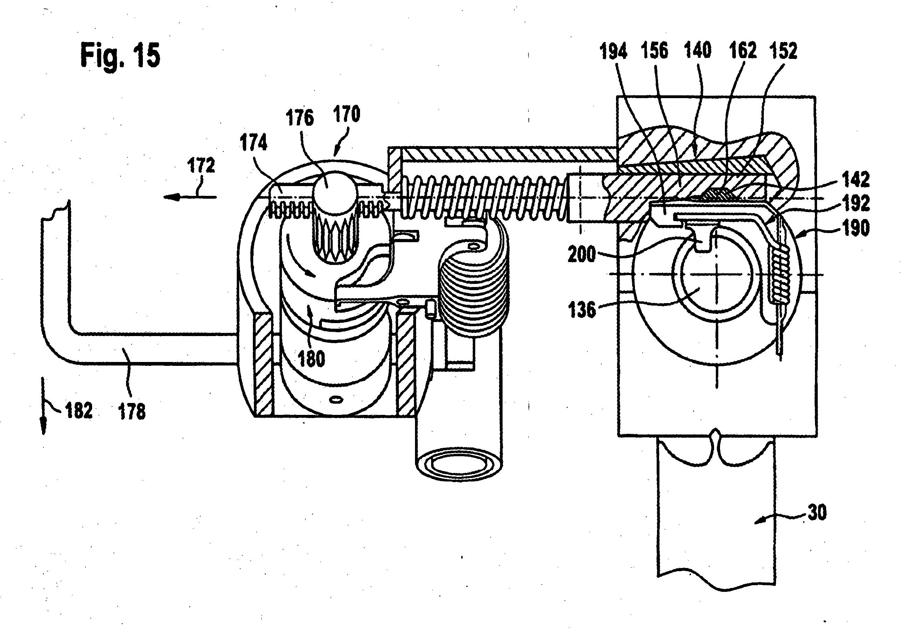

Ein vorteilhaftes Ausführungsbeispiel, dargestellt in Fig. 14 und Fig. 15 sieht vor, daß das Antriebselement 152 einen Zahnstangenabschnitt 174 aufweist, welcher mit einem Antriebsritzel 176 der Betätigungseinrichtung 170 in Eingriff steht.

Die Betätigungseinrichtung 170 umfaßt ferner einen Betätigungshebel 178, mit welchem über einen Freilauf 180 durch Verschwenken des Betätigungshebels in einer Richtung 182 das Antriebsritzel 176 derart verdreht werden kann, daß dieses den Zahnstangenabschnitt 174 in der Richtung 172 verschiebt und somit der Kraft des elastischen Kraftspeichers entgegenwirkt, um das Antriebselement 152 soweit entgegengesetzt zur Aktivierungsrichtung 154 zu verschieben, daß der Sperrkörper 142 in die Aufnahme 162 eintaucht.

Um diese Stellung des Antriebselements 152 aufrecht zu erhalten, so lange bis das Anhängeelement 30 mit dem Fixierzapfen 86 wiederum in die Fixierstellung zurückgekehrt ist, ist die Blockiereinrichtung 140 noch zusätzlich mit einer Rasteinrichtung 190 versehen, welche dazu führt, daß das Antriebselement 152 in der inaktiven Stellung verbleibt.

Die Rasteinrichtung 190 umfaßt hierzu beispielsweise eine Rastklinke 192, welche mit einer Rastnase 194 versehen ist, die in der inaktiven Stellung des Antriebselements 152 eine Rastfläche 196 desselben hintergreift und dadurch die Rückkehr des Antriebselements 152 in die aktive Stellung verhindert.

Hierzu ist die Rastklinke 192 mittels eines Federelements 198 derart beaufschlagt, daß die Rastnase 194 stets in der inaktiven Stellung des Antriebselements 152 die Rastfläche 196 hintergreift. Ferner ist die Rastklinke mit einem Tastfinger 200 versehen, welcher durch das Ende 136 des Anhängeelements 30 dann beaufschlagbar ist, wenn dieses in der Fixierstellung steht. In dieser Stellung bewirkt das Beaufschlagen des Tastfingers 200 durch das Ende 136 des Anhängeelements 30 ein Verschieben der Rastklinke 192 entgegen der Wirkung des Federelements 198 und somit in eine Stellung, in welcher die Rastnase 194 die Rastfläche 196 nicht hintergreifen kann. Erst dann, wenn das Antriebselement 152 in der inaktiven Stellung steht und gleichzeitig das Ende 136 des Anhängeelements 30 sich aus der Fixierstellung in Richtung der Schwenkstellung herausbewegt, entfällt die Beaufschlagung des Tastfingers 200 der Rastklinke 192, so daß die Rastnase die Rastfläche 196 hintergreifen kann.

In diesem Fall kann dann die Einwirkung auf den Betätigungshebel 178 in Richtung 182 entfallen und der Betätigungshebel 178 entgegengesetzt zur Richtung 182 aufgrund des Freilaufs 180 in die Ausgangsstellung zurückkehren, während das Antriebselement 152 in der inaktiven Stellung so lange verbleibt, bis wieder eine Beaufschlagung des Tastfingers 200 der Rastklinke 192 erfolgt und die Rastnase 194 außer Eingriff mit der Rastfläche 196 gebracht wird, so daß das Antriebselement 152 aufgrund der Wirkung des elastischen Kraftspeichers 168 in der Aktivierungsrichtung 154 bewegt wird und in seine aktive Stellung übergeht, in welcher eine Beaufschlagung des Sperrkörpers 142 entweder durch die Verschiebefläche 164 oder die Keilfläche 166 erfolgt und somit das Anhängeelement 30 gegen ein Verlassen der Fixierstellung blockiert ist.

## Patentansprüche

1. Anhängekupplung für Kraftfahrzeuge umfassend
ein fahrzeugfestes Lagerelement (20),
ein gegenüber dem fahrzeugfesten Lagerelement (20) von einer Arbeitsstellung (A) in eine Ruhestellung (R) und umgekehrt bewegbares Anhängeelement (30), welches eine Kupplungskugel (34) und einen die Kupplungskugel (34) an einem ersten Ende (36) tragenden Kugelhals (32) umfasst, und welches relativ zum Lagerelement (20) in einer Verschieberichtung (133) zwischen einer das Anhängeelement (30) gegenüber dem Lagerelement (20) mehrachsig schwenkbar lagernden Schwenkstellung und einer das Anhängeelement (30) gegenüber dem Lagerelement (20) drehfest haltenden Fixierstellung verschiebbar ist, ein in der Schwenkstellung wirksames mehrachsiges Gelenksystem (40), durch welches das Anhängeelement (30) an dem Lagerelement (20) gelagert ist, und eine Fixiereinrichtung (84, 86, 100, 110, 120, 130), mit welcher das bewegbare Anhängeelement (30) mindestens in der Arbeitsstellung (A) an dem Lagerelement (20) formschlüssig fixierbar ist, wobei das Anhängeelement (30) in der Fixierstellung mit dem Lagerelement (20) durch einen ersten Satz von Fixierelementen (84, 86) wechselwirkt, von denen ein erstes (86) am Anhängeelement (30) und ein zweites (84) am Lagerelement (20) angeordnet ist,
**dadurch gekennzeichnet, dass** das Anhängeelement (30) und das Lagerelement (20) in der Fixierstellung durch einen zweiten Satz von Fixierelementen (100, 110) wechselwirkt, von denen ein erstes (100) am Anhängeelement (30) und ein zweites (110) am Lagerelement (20) angeordnet ist, und dass in der Fixierstellung der erste Satz von Fixierelementen (84, 86) auf einer Seite des Gelenksystems (40) und der zweite Satz von Fixierelementen (100, 110) auf der anderen Seite des Gelenksystems (40) angeordnet ist, dass die Fixiereinrichtung eine zwischen dem Lagerelement (20) und dem Anhängeelement (30) wirksame Blockiereinrichtung (140) aufweist, die ein Bewegen des Anhängeelements (30) relativ zum Lagerelement (20) entgegengesetzt zur Verschieberichtung (133) blockiert, dass die Blockiereinrichtung (140) einen an einem der Elemente (20) beweglich angeordneten Sperrkörper (142) aufweist, welcher in eine eine Sperrfläche (144) am anderen Element (30) hintergreifende Position bringbar ist, und dass die Blockiereinrichtung (140) in der Sperrstellung des Sperrkörpers (142) aufgrund von dessen Zusammenwirken mit der Sperrfläche (144) das Anhängeelement (30) in Richtung der Fixierstellung kraftbeaufschlagt.

2. Anhängekupplung nach Anspruch 1, **dadurch gekennzeichnet, dass** das Anhängeelement (30) in der Schwenkstellung mindestens um eine erste Schwenkachse (42) und um mindestens eine quer zur ersten Schwenkachse (42) verlaufende zweite Schwenkachse (44) schwenkbar ist.

3. Anhängekupplung nach Anspruch 2, **dadurch gekennzeichnet, dass** das Anhängeelement in der Schwenkstellung um mehr als eine quer zur ersten Schwenkachse (42) verlaufende Achse (44) schwenkbar ist.

4. Anhängekupplung nach einem der voranstehenden Ansprüche, **dadurch gekennzeichnet, dass** das Gelenksystem (40) mindestens einen Gelenckörper (50) und eine Gelenkkörperaufnahme (64) umfasst.

5. Anhängekupplung nach Anspruch 4, **dadurch gekennzeichnet, dass** das Gelenksystem (40) ein Kugelgelenk (70) umfasst.

6. Anhängekupplung nach Anspruch 5, **dadurch gekennzeichnet, dass** der Gelenkkörper (50) mindestens einen Bereich mit einer Kugelaußenfläche (62) umfasst.

7. Anhängekupplung nach Anspruch 5 oder 6, **dadurch gekennzeichnet, dass** die Gelenkkörperaufnahme (64) mindestens einen Bereich mit einer Kugelinnenfläche (66) umfasst.

8. Anhängekupplung nach einem der Ansprüche 4 bis 7, **dadurch gekennzeichnet, dass** das Anhängeelement (30) gegenüber dem Gelenkkörper (50) um die erste Schwenkachse (42) drehbar ist.

9. Anhängekupplung nach einem der Ansprüche 4 bis 8, **dadurch gekennzeichnet, dass** das Anhängeelement (30) relativ zum Gelenkkörper (50) verschiebbar ist.

10. Anhängekupplung nach einem der voranstehenden Ansprüche, **dadurch gekennzeichnet, dass** der Gelenkkörper (50) ausschließlich gelenkig und unverschiebbar an dem Lagerelement (20) gelagert ist.

11. Anhängekupplung nach Anspruch 9 oder 10, **dadurch gekennzeichnet, dass** das Anhängeelement (30) mit einem Lagerzapfen (56) den Gelenckörper (50) in Richtung von dessen Längsachse (78) durchsetzt.

12. Anhängekupplung nach einem der voranstehenden Ansprüche, **dadurch gekennzeichnet, dass** das Gelenksystem (40) in der Fixierstellung im Wesentlichen kräftefrei ist.

13. Anhängekupplung nach einem der voranstehenden Ansprüche, **dadurch gekennzeichnet, dass** das Anhängeelement (30) und das Lagerelement (20) in der Fixierstellung durch einen dritten Satz von Fixierelementen (120, 130) wechselwirken, von denen ein erstes (120) am Anhängeelement (30) und zweites (130) am Lagerelement (20) angeordnet ist.

14. Anhängekupplung nach Anspruch 13, **dadurch gekennzeichnet, dass** der dritte Satz von Fixierelementen (120, 130) auf derselben Seite des Gelenksystems (40) angeordnet ist, wie der zweite Satz von Fixierelementen (100, 110).

15. Anhängekupplung nach Anspruch 13 oder 14, **dadurch gekennzeichnet, dass** der zweite Satz von Fixierelementen (100, 110) und der dritte Satz von Fixierelementen (120, 130) auf einander gegenüberliegenden Seiten des Anhängeelements (30) angeordnet sind.

16. Anhängekupplung nach einem der Ansprüche 13 bis 15, **dadurch gekennzeichnet, dass** der dritte Satz von Fixierelementen (120, 130) im selben Bereich (106) des Anhängeelements (30) wirksam ist wie der zweite Satz von Fixierelementen (100, 110).

17. Anhängekupplung nach einem der voranstehenden Ansprüche, **dadurch gekennzeichnet, dass** die Sätze von Fixierelementen (84, 86, 100, 110, 120, 130) durch Bewegen des Anhängeelements (30) von der Fixierstellung in die Schwenkstellung außer Wechselwirkung bringbar sind.

18. Anhängekupplung nach einem der voranstehenden Ansprüche, **dadurch gekennzeichnet, dass** der erste Satz von Fixierelementen einen als erstes Formschlusselement am Anhängeelement (30) angeordneten Fixierzapfen (86) und als zweites Formschlusselement eine am Lagerelement (20) angeordnete Zapfenaufnahme (84) aufweist.

19. Anhängekupplung nach Anspruch 18, **dadurch gekennzeichnet, dass** der erste Satz von Fixierelementen (84, 86) auf einer dem Kugelhals (32) abgewandten Seite des Gelenksystems (40) angeordnet ist.

20. Anhängekupplung nach Anspruch 18 oder 19, **dadurch gekennzeichnet, dass** der Fixierzapfen (86) den Gelenkkörper (50) durchgreift und relativ zum Gelenkkörper (50) in Richtung seiner Längsachse (78) verschiebbar ist.

21. Anhängekupplung nach einem der Ansprüche 18 bis 20, **dadurch gekennzeichnet, dass** das Anhängeelement (30) in der Fixierstellung mit seinem der Kupplungskugel (34) gegenüberliegenden Ende (136) maximal über den Gelenkkörper (50) übersteht und in der Schwenkstellung mit diesem Ende (136) innerhalb einer Außenkontur (62) des Gelenkkörpers (50) liegt.

22. Anhängekupplung nach einem der voranstehenden Ansprüche, **dadurch gekennzeichnet, dass** der erste Satz von Formschlusselementen (84, 86) das Anhängeelement (30) relativ zum Lagerelement (20) in mindestens einer Querrichtung quer zur Verschieberichtung (133) festlegt.

23. Anhängekupplung nach Anspruch 22, **dadurch gekennzeichnet, dass** der erste Satz von Formschlusselementen (84, 86) das Anhängeelement (30) in mindestens zwei quer zueinander und quer zur Verschieberichtung (133) verlaufenden Querrichtungen festlegt.

24. Anhängekupplung nach einem der voranstehenden Ansprüche, **dadurch gekennzeichnet, dass** der zweite Satz von Fixierelementen einen Formschlusskörper (100) und eine Formschlussaufnahme (110) aufweist.

25. Anhängekupplung nach Anspruch 24, **dadurch gekennzeichnet, dass** der Formschlusskörper (100) am Anhängeelement (30) und die Formschlussaufnahme (110) am Lagerelement (20) angeordnet ist.

26. Anhängekupplung nach Anspruch 24 oder 25, **dadurch gekennzeichnet, dass** mindestens eines der Fixierelemente (100, 110) des zweiten Satzes von Fixierelementen in einem Winkel zueinander verlaufende Formschlussflächen (102, 104, 112, 114) aufweist.

27. Anhängekupplung nach Anspruch 26, **dadurch gekennzeichnet, dass** beide Fixierelemente (100, 110) des zweiten Satzes von Fixierelementen in dem Winkel zueinander verlaufende Formschlussflächen (102, 104, 112, 114) aufweisen.

28. Anhängekupplung nach Anspruch 26 oder 27, **dadurch gekennzeichnet, dass** die Formschlussflächen (102, 104, 112, 114) in der Verschieberichtung (133) mit zunehmender Erstreckung in dieser aufeinander zu verlaufen.

29. Anhängekupplung nach einem der voranstehenden Ansprüche, **dadurch gekennzeichnet, dass** die zweiten Formschlusselemente (100, 110) das Anhängeelement (30) gegenüber dem Lagerelement (20) drehfest festlegen.

30. Anhängekupplung nach einem der voranstehenden Ansprüche, **dadurch gekennzeichnet, dass** der zweite Satz von Formschlusselementen (100, 110) in einer quer zur Verschieberichtung (133) verlaufenden Querrichtung eine Querkraft erzeugt.

31. Anhängekupplung nach einem der voranstehenden Ansprüche, **dadurch gekennzeichnet, dass** in der Fixierstellung der zweite Satz von Fixierelementen (100, 110) auf einer in Fahrtrichtung rückwärtigen Seite des Lagerelements (20) und des Anhängeelements (30) wirksam ist.

32. Anhängekupplung nach einem der voranstehenden Ansprüche, **dadurch gekennzeichnet, dass** in der Fixierstellung der zweite Satz von Fixierelementen (100, 110) im Bereich nahe eines zweiten Endes (38) des Kugelhalses (32) wirksam ist.

33. Anhängekupplung nach einem der voranstehenden Ansprüche, **dadurch gekennzeichnet, dass** das am Anhängeelement (30) angeordnete Fixierelement (100) im Bereich einer zum zweiten Ende (38) des Kugelhalses (32) hin verlaufenden Umbiegung (106) des Kugelhalses (32) angeordnet ist.

34. Anhängekupplung nach einem der Ansprüche 13 bis 33, **dadurch gekennzeichnet, dass** der dritte Satz von Fixierelementen (120, 130) einen am Anhängeelement (30) angeordneten Formschlusskörper (120) und eine am Lagerelement (20) angeordnete Formschlussaufnahme (130) umfasst.

35. Anhängekupplung nach einem der Ansprüche 13 bis 34, **dadurch gekennzeichnet, dass** in der Fixierstellung der dritte Satz von Fixierelementen (120, 130) auf einer in Fahrtrichtung vorderen Seite des Lagerelements (20) und des Anhängeelements (30) angeordnet ist.

36. Anhängekupplung nach einem der Ansprüche 13 bis 35, **dadurch gekennzeichnet, dass** der dritte Satz von Fixierelementen (120, 130) mit dem zweiten Satz von Fixierelementen (100, 110) in der Fixierstellung das Anhängeelement (30) quer zur Verschieberichtung (133) im Wesentlichen spielfrei fixierend ausgebildet sind.

37. Anhängekupplung nach Anspruch 36, **dadurch gekennzeichnet, dass** in der Fixierstellung der zweite Satz von Fixierelementen (100, 110) das Anhängeelement (30) in diesem Bereich mit einer quer zur Verschieberichtung (133) weisenden Kraftkomponente beaufschlagt.

38. Anhängekupplung nach einem der voranstehenden Ansprüche, **dadurch gekennzeichnet, dass** der Sperrkörper (142) von einer Freigabestellung kraftbeaufschlagt in einer Bewegungsrichtung (148) in die Sperrstellung bewegbar ist.

39. Anhängekupplung nach Anspruch 38, **dadurch gekennzeichnet, dass** die Blockiereinrichtung (140) einen Sperrkörperantrieb (150) aufweist, mit welchem der Sperrkörper (142) mit einer diesen von der Freigabestellung in Richtung der Sperrstellung bewegenden Kraft beaufschlagbar ist.

40. Anhängekupplung nach Anspruch 39, **dadurch gekennzeichnet, dass** der Sperrkörperantrieb (150) ein Antriebselement (152) aufweist, mit welchem der Sperrkörper (142) von der Freigabestellung in die Sperrstellung bewegbar ist.

41. Anhängekupplung nach Anspruch 40, **dadurch gekennzeichnet, dass** das Antriebselement (152) durch einen elastischen Kraftspeicher (168) beaufschlagt ist.

42. Anhängekupplung nach einem der voranstehenden Ansprüche, **dadurch gekennzeichnet, dass** der mindestens eine Sperrkörper (142) und der Sperrkörperantrieb (150) in dem Lagerelement (20) angeordnet sind.

43. Anhängekupplung nach Anspruch 42, **dadurch gekennzeichnet, dass** in dem Lagerelement (20) der mindestens eine Sperrkörper (142) zwischen der Freigabestellung und der Sperrstellung in der Bewegungsrichtung (148) und quer zur Verschieberichtung (133) bewegbar ist.

44. Anhängekupplung nach Anspruch 43, **dadurch gekennzeichnet, dass** das Antriebselement (152) in einer quer zur Bewegungsrichtung (148) verlaufenden Aktivierungsrichtung (154) verschiebbar im Lagerelement (20) angeordnet ist.

45. Anhängekupplung nach einem der Ansprüche 40 bis 44, **dadurch gekennzeichnet, dass** das Antriebselement (152) eine Antriebskulisse (156) einer Aufnahme (162) aufweist, in welche der Sperrkörper (142) in der Freigabestellung eintaucht, und eine Verschiebefläche (164), mit welcher der Sperrkörper (142) von der Freigabestellung in die Sperrstellung bewegbar ist.

46. Anhängeelement nach einem der voranstehenden Ansprüche, **dadurch gekennzeichnet, dass** die Blockiereinrichtung (140) zumindest ein Teil der Sätze von Fixierelementen (100, 110, 120, 130) in spielfreier Anlage hält.

47. Anhängekupplung nach Anspruch 46, **dadurch gekennzeichnet, dass** die Blockiereinrichtung (140) auf den mindestens einen Teil der Sätze von Fixierelementen (100, 110, 120, 130) spielfrei nachstellend wirkt.

48. Anhängekupplung nach einem der voranstehenden Ansprüche, **dadurch gekennzeichnet, dass** die Sperrfläche (144) schräg zur Verschieberichtung (133) verläuft.

49. Anhängekupplung nach Anspruch 48, **dadurch gekennzeichnet, dass** sich die Verschiebefläche (164) des Antriebselements (152) eine Keilfläche (166) anschließt, welche den Sperrkörper (142) in Richtung der Sperrstellung nachstellend beaufschlagt.

50. Anhängekupplung nach einem der voranstehenden Ansprüche, **dadurch gekennzeichnet, dass** die Blockiereinrichtung (140) eine auf den Sperrkörperantrieb (150) wirkende Betätigungseinrichtung (170) umfasst, mit welcher auf das Antriebselement (152) entgegen der Kraftwirkung des elastischen Kraftspeichers (168) einwirkbar ist.

51. Anhängekupplung nach Anspruch 50, **dadurch gekennzeichnet, dass** die Betätigungseinrichtung (170) einen Freilauf (180) aufweist.

52. Anhängekupplung nach einem der Ansprüche 48 bis 51, **dadurch gekennzeichnet, dass** der Sperrkörperantrieb (150) eine Rasteinrichtung (190) aufweist, welche das Antriebselement (152) in seiner inaktiven Stellung hält, solange das Anhängeelement (30) außerhalb der Fixierstellung steht.

## Claims

1. Trailer coupling for motor vehicles, comprising
a vehicle-fixed bearing element (20),
a coupling element (30), which is movable relative to the vehicle-fixed bearing element (20) from an operating position (A) to an inoperative position (R) and vice versa and comprises a coupling ball (34) and a ball neck (32) that carries the coupling ball (34) on a first end (36) and which is displaceable relative to the bearing element (20) in a displacement direction (133) between a pivoting position, in which the coupling element (30) is supported in a multi-axially pivotable manner relative to the bearing element (20), and a fixing position, in which the coupling element (30) is held rotationally fixed relative to the bearing element (20), a multi-axis articulation system (40), which is operative in the pivoting position and by means of which the coupling element (30) is supported on the bearing element (20), and a fixing device (84, 86, 100, 110, 120, 130), by means of which the movable coupling element (30) at least in the operating position (A) is fixable positively on the bearing element (20), wherein the coupling element (30) in the fixing position interacts with the bearing element (20) by means of a first set of fixing elements (84, 86), of which a first (86) is disposed on the coupling element (30) and a second (84) is disposed on the bearing element (20),
**characterized in that** the coupling element (30) and the bearing element (20) in the fixing position interact by means of a second set of fixing elements (100, 110), of which a first (100) is disposed on the coupling element (30) and a second (110) is disposed on the bearing element (20), and that in the fixing position the first set of fixing elements (84, 86) is disposed at one side of the articulation system (40) and the second set of fixing elements (100, 110) is disposed at the other side of the articulation system (40), **in that** the fixing device comprises a blocking device (140), which is operative between the bearing element (20) and the coupling element (30) and blocks a moving of the coupling element (30) relative to the bearing element (20) in the opposite direction to the displacement direction (133), **in that** the blocking device (140) comprises a locking body (142), which is disposed movably on one of the elements (20) and is movable into a position of engagement behind a locking surface (144) on the other element (30), and **in that** the blocking device (140) in the locking position of the locking body (142) as a result of the interacting of the locking body (142) with the locking surface (144) loads the coupling element (30) in the direction of the fixing position.

2. Trailer coupling according to claim 1, **characterized in that** the coupling element (30) in the pivoting position is pivotable at least about one first pivotal axis (42) and about at least one second pivotal axis (44) that extends transversely relative to the first pivotal axis (42).

3. Trailer coupling according to claim 2, **characterized in that** the coupling element in the pivoting position is pivotable about more than one axis (44) extending transversely relative to the first pivotal axis (42).

4. Trailer coupling according to one of the preceding claims, **characterized in that** the articulation system (40) comprises at least one articulation body (50) and an articulation body receiver (64).

5. Trailer coupling according to claim 4, **characterized in that** the articulation system (40) comprises a ball joint (70).

6. Trailer coupling according to claim 5, **characterized in that** the articulation body (50) comprises at least one region having a spherical outer surface (62).

7. Trailer coupling according to claim 5 or 6, **characterized in that** the articulation body receiver (64) comprises at least one region having a spherical inner surface (66).

8. Trailer coupling according to one of claims 4 to 7, **characterized in that** the coupling element (30) is rotatable relative to the articulation body (50) about the first pivotal axis (42).

9. Trailer coupling according to one of claims 4 to 8, **characterized in that** the coupling element (30) is displaceable relative to the articulation body (50).

10. Trailer coupling according to one of the preceding claims, **characterized in that** the articulation body (50) is supported exclusively in an articulation and non-displaceable manner on the bearing element (20).

11. Trailer coupling according to claim 9 or 10, **characterized in that** the coupling element (30) has a bearing pin (56), which passes through the articulation body (50) in the direction of its longitudinal axis (78).

12. Trailer coupling according to one of the preceding claims, **characterized in that** the articulation system (40) in the fixing position is substantially force-free.

13. Trailer coupling according to one of the preceding claims, **characterized in that** the coupling element (30) and the bearing element (20) in the fixing position interact by means of a third set of fixing elements (120, 130), of which a first (120) is disposed on the coupling element (30) and a second (130) is disposed on the bearing element (20).

14. Trailer coupling according to claim 13, **characterized in that** the third set of fixing elements (120, 130) is disposed at the same side of the articulation system (40) as the second set of fixing elements (100, 110).

15. Trailer coupling according to claim 13 or 14, **characterized in that** the second set of fixing elements (100, 110) and the third set of fixing elements (120, 130) are disposed at mutually opposite sides of the coupling element (30).

16. Trailer coupling according to one of claims 13 to 15, **characterized in that** the third set of fixing elements (120, 130) is operative in the same region (106) of the coupling element (30) as the second set of fixing elements (100, 110).

17. Trailer coupling according to one of the preceding claims, **characterized in that** the sets of fixing elements (84, 86, 100, 110, 120, 130) are movable out of interaction by moving the coupling element (30) from the fixing position into the pivoting position.

18. Trailer coupling according to one of the preceding claims, **characterized in that** the first set of fixing elements comprises a fixing pin (86), which is disposed as a first form-fit element on the coupling element (30), and as a second form-fit element a pin receiver (84), which is disposed on the bearing element (20).

19. Trailer coupling according to claim 18, **characterized in that** the first set of fixing elements (84, 86) is disposed at a side of the articulation system (40) remote from the ball neck (32).

20. Trailer coupling according to claim 18 or 19, **characterized in that** the fixing pin (86) engages through the articulation body (50) and is displaceable in the direction of its longitudinal axis (78) relative to the articulation body (50).

21. Trailer coupling according to one of claims 18 to 20, **characterized in that** in the fixing position the opposite end (136) of the coupling element (30) to the coupling ball (34) projects to the maximum extent from the articulation body (50) and in the pivoting position said end (136) lies inside an external contour (62) of the articulation body (50).

22. Trailer coupling according to one of the preceding claims, **characterized in that** the first set of form-fit elements (84, 86) fixes the coupling element (30) relative to the bearing element (20) in at least one transverse direction transversely relative to the displacement direction (133).

23. Trailer coupling according to claim 22, **characterized in that** the first set of form-fit elements (84, 86) fixes the coupling element (30) in at least two transverse directions that extend transversely relative to one another and transversely relative to the displacement direction (133).

24. Trailer coupling according to one of the preceding claims, **characterized in that** the second set of fixing elements comprises a form-fit body (100) and a form-fit receiver (110).

25. Trailer coupling according to claim 24, **characterized in that** the form-fit body (100) is disposed on the coupling element (30) and the form-fit receiver (110) is disposed on the bearing element (20).

26. Trailer coupling according to claim 24 or 25, **characterized in that** at least one of the fixing elements (100, 110) of the second set of fixing elements has form-fit surfaces (102, 104, 112, 114) extending at an angle to one another.

27. Trailer coupling according to claim 26, **characterized in that** both fixing elements (100, 110) of the second set of fixing elements have form-fit surfaces (102, 104, 112, 114) extending at an angle to one another.

28. Trailer coupling according to claim 26 or 27, **characterized in that** the form-fit surfaces (102, 104, 112, 114) run towards one another to an increasing extent in the displacement direction (133).

29. Trailer coupling according to one of the preceding claims, **characterized in that** the two form-fit elements (100, 110) fix the coupling element (30) in a rotationally fixed manner relative to the bearing element (20).

30. Trailer coupling according to one of the preceding claims, **characterized in that** the second set of form-fit elements (100, 110) generates a transverse force in a transverse direction extending transversely relative to the displacement direction (133).

31. Trailer coupling according to one of the preceding claims, **characterized in that** in the fixing position the second set of fixing elements (100, 110) is operative at an, in travel direction, rear side of the bearing element (20) and the coupling element (30).

32. Trailer coupling according to one of the preceding claims, **characterized in that** inn the fixing position the second set of fixing elements (100, 110) is operative in the region close to a second end (38) of the ball neck (32).

33. Trailer coupling according to one of the preceding claims, **characterized in that** the fixing element (100) disposed on the coupling element (30) is disposed in the region of a bend (106) of the ball neck (32) that extends towards the second end (38) of the ball neck (32).

34. Trailer coupling according to one of claims 13 to 33, **characterized in that** the third set of fixing elements (120, 130) comprises a form-fit body (120) disposed on the coupling element (30) and a form-fit receiver (130) disposed on the bearing element (20).

35. Trailer coupling according to one of claims 13 to 34, **characterized in that** in the fixing position the third set of fixing elements (120, 130) is disposed on an, in travel direction, front side of the bearing element (20) and the coupling element (30).

36. Trailer coupling according to one of claims 13 to 35, **characterized in that** the third set of fixing elements (120, 130) with the second set of fixing elements (100, 110) in the fixing position are configured so as to fix the coupling element (30) substantially without play transversely of the displacement direction (133).

37. Trailer coupling according to claim 36, **characterized in that** in the fixing position the second set of fixing elements (100, 110) acts upon the coupling element (30) in said region with a component of force oriented transversely relative to the displacement direction (133).

38. Trailer coupling according to one of the preceding claims, **characterized in that** the locking body (142) is movable from a release position under the action of force in a direction of motion (148) into the locking position.

39. Trailer coupling according to claim 38, **characterized in that** the blocking device (140) comprises a locking body drive (150), by means of which the locking body (142) is subjectable to a force that moves it from the release position in the direction of the locking position.

40. Trailer coupling according to claim 39, **characterized in that** the locking body drive (150) comprises a drive element (152), by means of which the locking body (142) is movable from the release position into the locking position.

41. Trailer coupling according to claim 40, **characterized in that** the drive element (152) is acted upon by a resilient energy storage mechanism (168).

42. Trailer coupling according to one of the preceding claims, **characterized in that** the at least one locking body (142) and the locking body drive (150) are disposed in the bearing element (20).

43. Trailer coupling according to one of claims 42, **characterized in that** in the bearing element (20) the at least one locking body (142) is movable between the release position and the locking position in the direction of motion (148) and transversely relative to the displacement direction (133).

44. Trailer coupling according to claim 43, **characterized in that** the drive element (152) is disposed in the bearing element (20) so as to be displaceable in an activating direction (154) that extends transversely relative to the direction of motion (148).

45. Trailer coupling according to one of claims 40 to 44, **characterized in that** the drive element (152) comprises a drive link (156) of a receiver (162), into which the locking body (142) engages in the release position, and a displacement surface (164), by means of which the locking body (142) is movable from the release position into the locking position.

46. Trailer element according to one of the preceding claims, **characterized in that** the blocking device (140) holds at least one part of the sets of fixing elements (100, 110, 120, 130) in play-free contact.

47. Trailer coupling according to claim 46, **characterized in that** the blocking device (140) acts in a play-free readjusting manner upon the at least one part of the sets of fixing elements (100, 110, 120, 130).

48. Trailer coupling according to one of the preceding claims, **characterized in that** the locking surface (144) extends obliquely relative to the displacement direction (133).

49. Trailer coupling according to claim 48, **characterized in that** adjoining the displacement surface (164) of the drive element (152) is a wedge surface (166), which in a readjusting manner loads the locking body (142) in the direction of the locking position.

50. Trailer coupling according to one of the preceding claims, **characterized in that** the blocking device (140) comprises an actuating device (170), which acts upon the locking body drive (150) and by means of which the drive element (152) can be acted upon counter to the action of force of the resilient energy storage mechanism (168).

51. Trailer coupling according to claim 50, **characterized in that** the actuating device (170) comprises a free-wheel (180).

52. Trailer coupling according to one of claims 48 to 51, **characterized in that** the locking body drive (150) comprises a detent device (190), which holds the drive element (152) in its inactive position so long as the coupling element (30) is outside of the fixing position.

## Revendications

1. Attelage de remorque pour des véhicules automobiles, comprenant :
un élément de palier (20) solidaire du véhicule,
un élément de remorque (30) mobile, par rapport à l'élément de palier (20) solidaire du véhicule, d'une position de travail (A) à une position de repos (R) et inversement, qui comprend une rotule d'attelage (34) et un col de rotule (32) portant la rotule d'attelage (34) à une première extrémité (36) et qui est déplaçable, par rapport à l'élément de palier (20), dans une direction de déplacement (133) entre une position de pivotement supportant l'élément de remorque (30) de façon pivotante autour de plusieurs axes par rapport à l'élément de palier (20) et une position de fixation maintenant l'élément de remorque (30) sans rotation par rapport à l'élément de palier (20),
un système d'articulation (40) à plusieurs axes actif dans la position de pivotement, par lequel l'élément de remorque (30) est supporté sur l'élément de palier (20), et un dispositif de fixation (84, 86, 100, 110, 120, 130) avec lequel l'élément de remorque mobile (30) peut être fixé par emboîtement sur l'élément de palier (20) au moins dans la position de travail (A), dans lequel l'élément de remorque (30) interagit dans la position de fixation avec l'élément de palier (20) au moyen d'un premier jeu d'éléments de fixation (84, 86), dont un premier (86) est disposé sur l'élément de remorque (30) et un deuxième (84) est disposé sur l'élément de palier (20),
**caractérisé en ce que** l'élément de remorque (30) et l'élément de palier (20) interagissent dans la position de fixation au moyen d'un deuxième jeu d'éléments de fixation (100, 110), dont un premier (100) est disposé sur l'élément de remorque (30) et un deuxième (110) est disposé sur l'élément de palier (20), et **en ce que**, dans la position de fixation, le premier jeu d'éléments de fixation (84, 86) est disposé sur un côté du système d'articulation (40) et le deuxième jeu d'éléments de fixation (100, 110) est disposé sur l'autre côté du système d'articulation (40), que le dispositif de fixation présente un dispositif de blocage (140) actif entre l'élément de palier (20) et l'élément de remorque (30), qui bloque un mouvement, dans le sens opposé à la direction de déplacement (133), de l'élément de remorque (30) par rapport à l'élément de palier (20), que le dispositif de blocage présente un corps de blocage (142) disposé de façon mobile sur un des éléments (20), qui peut être amené dans une position accrochant par l'arrière une surface de blocage (144) sur l'autre élément (30), et que le dispositif de blocage (140) dans la position de blocage du corps de blocage (142) soumet l'élément de remorque (30) à une force dans la direction de la position de fixation en raison de sa coopération avec la surface de blocage (144).

2. Attelage de remorque selon la revendication 1, **caractérisé en ce que** l'élément de remorque (30) peut, dans la position de pivotement, pivoter au moins autour d'un premier axe de pivotement (42) et autour d'au moins un deuxième axe de pivotement (44) orienté transversalement au premier axe de pivotement (42).

3. Attelage de remorque selon la revendication 2, **caractérisé en ce que** l'élément de remorque peut, dans la position de pivotement, pivoter autour de plus qu'un axe de pivotement (44) orienté transversalement au premier axe de pivotement (42).

4. Attelage de remorque selon l'une quelconque des revendications précédentes, **caractérisé en ce que** le système d'articulation (40) comprend au moins un corps d'articulation (50) et un logement de corps d'articulation (64).

5. Attelage de remorque selon la revendication 4, **caractérisé en ce que** le système d'articulation (40) comprend un joint à rotule (70).

6. Attelage de remorque selon la revendication 5, **caractérisé en ce que** le corps d'articulation (50) comporte au moins une zone avec une surface extérieure sphérique (62).

7. Attelage de remorque selon la revendication 5 ou 6, **caractérisé en ce que** le logement de corps d'articulation (64) comporte au moins une zone avec une surface intérieure sphérique (66).

8. Attelage de remorque selon l'une quelconque des revendications 4 à 7, **caractérisé en ce que** l'élément de remorque (30) peut tourner par rapport au corps d'articulation (50) autour du premier axe de pivotement (42).

9. Attelage de remorque selon l'une quelconque des revendications 4 à 8, **caractérisé en ce que** l'élément de remorque (30) peut coulisser par rapport au corps d'articulation (50).

10. Attelage de remorque selon l'une quelconque des revendications précédentes, **caractérisé en ce que** le corps d'articulation (50) est supporté de façon exclusivement articulée et non coulissante sur l'élément de palier (20).

11. Attelage de remorque selon la revendication 9 ou 10, **caractérisé en ce que** l'élément de remorque (30) traverse avec un tourillon (56) le corps d'articulation (50) dans la direction de son axe longitudinal (78).

12. Attelage de remorque selon l'une quelconque des revendications précédentes, **caractérisé en ce que** le système d'articulation (40) est essentiellement libre de forces dans la position de fixation.

13. Attelage de remorque selon l'une quelconque des revendications précédentes, **caractérisé en ce que** l'élément de remorque (30) et l'élément de palier (20) interagissent, dans la position de fixation, au moyen d'un troisième jeu d'éléments de fixation (120, 130), dont un premier (120) est disposé sur l'élément de remorque (30) et un deuxième (130) est disposé sur l'élément de palier (20).

14. Attelage de remorque selon la revendication 13, **caractérisé en ce que** le troisième jeu d'éléments de fixation (120, 130) est disposé sur le même côté du système d'articulation (40) que le deuxième jeu d'éléments de fixation (100, 110).

15. Attelage de remorque selon la revendication 13 ou 14, **caractérisé en ce que** le deuxième jeu d'éléments de fixation (100, 110) et le troisième jeu d'éléments de fixation (120, 130) sont disposés sur des côtés opposés l'un à l'autre de l'élément de remorque (30).

16. Attelage de remorque selon l'une quelconque des revendications 13 à 15, **caractérisé en ce que** le troisième jeu d'éléments de fixation (120, 130) est actif dans la même zone (106) de l'élément de remorque (30) que le deuxième jeu d'éléments de fixation (100, 110).

17. Attelage de remorque selon l'une quelconque des revendications précédentes, **caractérisé en ce que** les jeux d'éléments de fixation (84, 86, 100, 110, 120, 130) peuvent être mis hors d'état d'interagir par un déplacement de l'élément de remorque (30) de la position de fixation à la position de pivotement.

18. Attelage de remorque selon l'une quelconque des revendications précédentes, **caractérisé en ce que** le premier jeu d'éléments de fixation présente un premier tourillon de fixation (86) comme premier élément d'emboîtement disposé sur l'élément de remorque (30) et un logement de tourillon (84) comme deuxième élément d'emboîtement disposé sur l'élément de palier (20).

19. Attelage de remorque selon la revendication 18, **caractérisé en ce que** le premier jeu d'éléments de fixation (84, 86) est disposé sur un côté du système d'articulation (40) situé à l'opposé du col de rotule (32).

20. Attelage de remorque selon la revendication 18 ou 19, **caractérisé en ce que** le tourillon de fixation (86) traverse le corps d'articulation (50) et peut coulisser par rapport au corps d'articulation (50) dans la direction de son axe longitudinal (78).

21. Attelage de remorque selon l'une quelconque des revendications 18 à 20, **caractérisé en ce que** l'élément de remorque (30) dans la position de fixation dépasse avec son extrémité (136) opposée à la rotule d'attelage (34) au maximum au-delà du corps d'articulation (50) et dans la position de pivotement se situe avec cette extrémité (136) à l'intérieur d'un contour extérieur (62) du corps d'articulation (50).

22. Attelage de remorque selon l'une quelconque des revendications précédentes, **caractérisé en ce que** le premier jeu d'éléments d'emboîtement (84, 86) immobilise l'élément de remorque (30) par rapport à l'élément de palier (20) dans au moins une direction transversale transversalement à la direction de déplacement (133).

23. Attelage de remorque selon la revendication 22, **caractérisé en ce que** le premier jeu d'éléments d'emboîtement (84, 86) immobilise l'élément de remorque (30) dans au moins deux directions transversales orientées transversalement l'une à l'autre et transversalement à la direction de déplacement (133).

24. Attelage de remorque selon l'une quelconque des revendications précédentes, **caractérisé en ce que** le deuxième jeu d'éléments de fixation présente un corps d'emboîtement (100) et un logement d'emboîtement (110).

25. Attelage de remorque selon la revendication 24, **caractérisé en ce que** le corps d'emboîtement (100) est disposé sur l'élément de remorque (30) et le logement d'emboîtement (110) est disposé sur l'élément de palier (20).

26. Attelage de remorque selon la revendication 24 ou 25, **caractérisé en ce qu'**au moins un des éléments de fixation (100, 110) du deuxième jeu d'éléments de fixation présente des surfaces d'emboîtement (102, 104, 112, 114) orientées sous un certain angle les unes par rapport aux autres.

27. Attelage de remorque selon la revendication 26, **caractérisé en ce que** les deux éléments de fixation (100, 110) du deuxième jeu d'éléments de fixation présentent des surfaces d'emboîtement (102, 104, 112, 114) orientées sous dudit angle l'une par rapport à l'autre.

28. Attelage de remorque selon la revendication 26 ou 27, **caractérisé en ce que** les surfaces d'emboîtement (102, 104, 112, 114) s'étendent l'une vers l'autre dans la direction de déplacement (133) avec une extension croissante dans celle-ci.

29. Attelage de remorque selon l'une quelconque des revendications précédentes, **caractérisé en ce que** les deuxièmes éléments d'emboîtement (100, 110) immobilisent l'élément de remorque (30) sans rotation par rapport à l'élément de palier (20).

30. Attelage de remorque selon l'une quelconque des revendications précédentes, **caractérisé en ce que** le deuxième jeu d'éléments d'emboîtement (100, 110) produit une force transversale dans une direction transversale orientée transversalement à la direction de déplacement (133).

31. Attelage de remorque selon l'une quelconque des revendications précédentes, **caractérisé en ce que**, dans la position de fixation, le deuxième jeu d'éléments de fixation (100, 110) est actif sur un côté arrière de l'élément de palier (20) et de l'élément de remorque (30) par rapport au sens de la marche.

32. Attelage de remorque selon l'une quelconque des revendications précédentes, **caractérisé en ce que**, dans la position de fixation, le deuxième jeu d'éléments de fixation (100, 110) est actif dans la zone proche d'une deuxième extrémité (38) du col de rotule (32).

33. Attelage de remorque selon l'une quelconque des revendications précédentes, **caractérisé en ce que** l'élément de fixation (100) disposé sur l'élément de remorque (30) est disposé dans la zone d'une courbe (106) du col de rotule (32) s'étendant vers la deuxième extrémité (38) du col de rotule (32).

34. Attelage de remorque selon l'une quelconque des revendications 13 à 33, **caractérisé en ce que** le troisième jeu d'éléments de fixation (120, 130) comprend un corps d'emboîtement (120) disposé sur l'élément de remorque (30) et un logement d'emboîtement (130) disposé sur l'élément de palier (20).

35. Attelage de remorque selon l'une quelconque des revendications 13 à 34, **caractérisé en ce que**, dans la position de fixation, le troisième jeu d'éléments de fixation (120, 130) est disposé sur un côté avant de l'élément de palier (20) et de l'élément de remorque (30) par rapport au sens de la marche.

36. Attelage de remorque selon l'une quelconque des revendications 13 à 35, **caractérisé en ce que** le troisième jeu d'éléments de fixation (120, 130) avec le deuxième jeu d'éléments de fixation (100, 110) sont réalisés de façon à fixer essentiellement sans jeu, dans la position de fixation, l'élément de remorque (30) transversalement à la direction de déplacement (133).

37. Attelage de remorque selon la revendication 36, **caractérisé en ce que**, dans la position de fixation, le deuxième jeu d'éléments de fixation (100, 110) agit dans cette zone sur l'élément de remorque (30) avec une composante de force orientée transversalement à la direction de déplacement (133).

38. Attelage de remorque selon l'une quelconque des revendications précédentes, **caractérisé en ce que** le corps de blocage (142) peut être déplacé sous l'action d'une force à partir d'une position de libération dans une direction de mouvement (148) à la position de blocage.

39. Attelage de remorque selon la revendication 38, **caractérisé en ce que** le dispositif de blocage (140) présente un entraînement de corps de blocage (150), avec lequel le corps de blocage (142) peut être soumis à une force déplaçant ce dernier de la position de libération dans la direction de la position de blocage.

40. Attelage de remorque selon la revendication 39, **caractérisé en ce que** l'entraînement de corps de blocage (150) présente un élément d'entraînement (152), avec lequel le corps de blocage (142) peut être déplacé de la position de libération à la position de blocage.

41. Attelage de remorque selon la revendication 40, **caractérisé en ce que** l'élément d'entraînement (152) est actionné au moyen d'un accumulateur de force élastique (168).

42. Attelage de remorque selon l'une quelconque des revendications précédentes, **caractérisé en ce que** ledit au moins un corps de blocage (142) et l'entraînement de corps de blocage (150) sont disposés dans l'élément de palier (20).

43. Attelage de remorque selon la revendication 42, **caractérisé en ce que** ledit au moins un corps de blocage (142) peut être déplacé, dans l'élément de palier (20), entre la position de libération et la position de blocage dans la direction de mouvement (148) et transversalement à la direction de déplacement (133).

44. Attelage de remorque selon la revendication 43, **caractérisé en ce que** l'élément d'entraînement (152) est disposé de façon coulissante dans l'élément de palier (20) dans une direction d'activation (154) s'étendant transversalement à la direction de mouvement (148).

45. Attelage de remorque selon l'une quelconque des revendications 40 à 44, **caractérisé en ce que** l'élément d'entraînement (152) présente une coulisse d'entraînement (156) d'un logement (162), dans laquelle le corps de blocage (142) plonge dans la position de libération, et une surface de déplacement (164), avec laquelle le corps de blocage (142) peut être déplacé de la position de libération à la position de blocage.

46. Attelage de remorque selon l'une quelconque des revendications précédentes, **caractérisé en ce que** le dispositif de blocage (140) maintient au moins une partie des jeux d'éléments de fixation (100, 110, 120, 130) en appui sans jeu.

47. Attelage de remorque selon l'une quelconque des revendications précédentes, **caractérisé en ce que** le dispositif de blocage (140) agit par ajustement sans jeu sur ladite au moins une partie des jeux d'éléments de fixation (100, 110, 120, 130).

48. Attelage de remorque selon l'une quelconque des revendications précédentes, **caractérisé en ce que** la surface de blocage (144) est orientée en oblique par rapport à la direction de déplacement (133).

49. Attelage de remorque selon la revendication 48, **caractérisé en ce que** la surface de déplacement (164) de l'élément d'entraînement (152) se raccorde à une surface en coin (166), qui agit par ajustement sur le corps de blocage (142) en direction de la position de blocage.

50. Attelage de remorque selon l'une quelconque des revendications précédentes, **caractérisé en ce que** le dispositif de blocage (140) comprend un dispositif d'actionnement (170) agissant sur l'entraînement de corps de blocage (150), avec lequel on peut agir sur l'élément d'entraînement (152) contre l'action de la force de l'accumulateur de force élastique (168).

51. Attelage de remorque selon la revendication 50, **caractérisé en ce que** le dispositif d'actionnement (170) présente un mécanisme de roue libre (180).

52. Attelage de remorque selon l'une quelconque des revendications 48 à 51, **caractérisé en ce que** l'entraînement de corps de blocage (150) présente un dispositif d'encliquetage (190), qui maintient l'élément d'entraînement (152) dans sa position inactive, aussi longtemps que l'élément de remorque (30) se trouve hors de la position de fixation.
